# EUROPEAN PATENT APPLICATION

(11) **EP 4 635 880 A1**
(43) Date of publication of application: **22.10.2025**
(21) Application number: 23903235.2
(22) Date of filing: 24.11.2023
(51) Int. Cl.: B65G 1/137, B65G 1/04

(54) **ARTICLE CLASSIFICATION SYSTEM AND ARTICLE CLASSIFICATION METHOD**

(30) Priority: 14.12.2022 JP 2022199679
(71) Applicant: Kabushiki Kaisha Toshiba, Tokyo 105-0023 (JP)
(72) Inventor: KOJIMA, Hidetaka, Kawasaki-shi, Kanagawa 212-0013 (JP); ASAHI, Kazutaka, Kawasaki-shi, Kanagawa 212-0013 (JP)
(74) Representative: HKW Intellectual Property PartG mbB
(86) International application number: PCT/JP2023/042118
(87) International publication number: WO 2024/127940

(57) **Abstract**

According to an embodiment, a shelf of an article sorting system is spaced apart from an input portion, is defined by a plurality of stages at least in a height direction, and includes a plurality of sorting destinations into which the articles are sorted. The automated guided vehicle is configured to move between the input portion and the sorting destinations of the shelf. The article transfer portion extends upward from the automated guided vehicle, and is configured to move according to a movement of the automated guided vehicle and operate so as to transfer the articles to the sorting destinations. The moving mechanism is configured to move according to a movement of the automated guided vehicle and move the article transfer portion in a vertical direction with respect to the automated guided vehicle to a height that allows the articles to be transferred to the sorting destinations of the shelf.

## Description

### FIELD

Embodiments of the present invention relate to an article sorting system and an article sorting method.

### BACKGROUND

For example, an article sorting system arranges sorting destinations in a plane to secure the number of sorting destinations.

### CITATION LIST

### PATENT LITERATURE

Patent Literature 1: Japanese Patent Application KOKAI Publication No. 2022-144067

### SUMMARY

### TECHNICAL PROBLEM

An object of the present invention is to provide an article sorting system that can easily improve a processing capability, and an article sorting method using such an article sorting system.

### SOLUTION TO PROBLEM

According to an embodiment, an article sorting system includes an input portion, a conveying apparatus, and a shelf portion. The conveying apparatus is configured to convey a plurality of articles through the input portion. The shelf portion is spaced apart from the input portion, is defined by a plurality of stages at least in a height direction, and includes a plurality of sorting destinations into which the plurality of articles are sorted. The conveying apparatus includes: an automated guided vehicle portion, an article transfer portion, a moving mechanism, and one or more processors. The automated guided vehicle portion is configured to move between the input portion and the plurality of sorting destinations of the shelf portion. The article transfer portion is provided on the automated guided vehicle portion, extends upward from the automated guided vehicle portion, and is configured to move according to a movement of the automated guided vehicle portion and operate so as to transfer the articles to the plurality of sorting destinations. The moving mechanism is configured to move according to a movement of the automated guided vehicle portion and move the article transfer portion in a vertical direction with respect to the automated guided vehicle portion to a height that allows the articles to be transferred to the sorting destinations of the shelf portion. The one or more processors is configured to control the automated guided vehicle portion, the article transfer portion, and the moving mechanism. The processor is configured to control the automated guided vehicle portion to move to a position facing selected one of the plurality of sorting destinations of the shelf portion, and to control the article transfer portion and the moving mechanism to cause the articles to be transferred to the sorting destination.

### BRIEF DESCRIPTION OF THE DRAWINGS

FIG. 1 is a schematic right side view of an article sorting system according to an embodiment.
FIG. 2 is a schematic top view of the article sorting system shown in FIG. 1.
FIG. 3 is a schematic plan view of sorting destinations of a shelf board in the lowermost stage.
FIG. 4 is a schematic view of sorting destinations of shelf boards as viewed from a direction indicated by the reference numeral IV in FIG. 3.
FIG. 5 is a schematic right side view of a conveying apparatus of the article sorting system according to a first embodiment.
FIG. 6 is a schematic view of the conveying apparatus as viewed from a direction indicated by the reference numeral VI in FIG. 5.
FIG. 7 is a schematic top view of a second transfer portion of the conveying apparatus shown in FIGS. 5 and 6.
FIG. 8 is a schematic view of the second transfer portion of the conveying apparatus as viewed from a direction indicated by the reference numeral VIII in FIG. 7.
FIG. 9 is a schematic view for explaining an operation of sorting articles into sorting destinations by using the conveying apparatus according to the first embodiment.
FIG. 10 is a block diagram showing an example of a configuration of a control system of the article sorting system according to an embodiment.
FIG. 11 is a block diagram showing an example of a configuration of a sorting control apparatus according to an embodiment.
FIG. 12 is a block diagram showing an example of a configuration of a sorter control apparatus according to an embodiment.
FIG. 13 is a block diagram showing an example of a configuration of a control apparatus for the conveying apparatus according to an embodiment.
FIG. 14 is a block diagram showing an example of a configuration of the conveying apparatus according to an embodiment.
FIG. 15 is a schematic view for explaining an operation of sorting articles into sorting destinations by using the conveying apparatus according to the first embodiment.
FIG. 16 is a flowchart showing an example of an operation of the article sorting system according to the first embodiment.
FIG. 17 is a diagram showing an example of a configuration of sorting destination information according to an embodiment.
FIG. 18 is a flowchart showing another example of an operation of the article sorting system according to the first embodiment.
FIG. 19 is a schematic view of a second transfer portion of a conveying apparatus of an article sorting system according to a second embodiment.
FIG. 20 is a schematic view of a mechanism for moving paddles of the second transfer portion shown in FIG. 19 in an axial direction and a mechanism for rotating the paddles.
FIG. 21 is a schematic view of an operation of rotating the paddles of the second transfer portion shown in FIG. 19.
FIG. 22 is a schematic view of a state in which the paddles of the second transfer portion shown in FIG. 19 are positioned outside an article placement portion.
FIG. 23 is a schematic view of a state in which the paddles of the second transfer portion shown in FIG. 19 are positioned inside the article placement portion.
FIG. 24 is a schematic view of a second transfer portion of a conveying apparatus of an article sorting system according to a third embodiment.
FIG. 25 is a schematic view of a state in which a placement surface of the second transfer portion shown in FIG. 24 is inclined.

### DETAILED DESCRIPTION

Hereinafter, embodiments will be described with reference to the drawings.

### (First Embodiment)

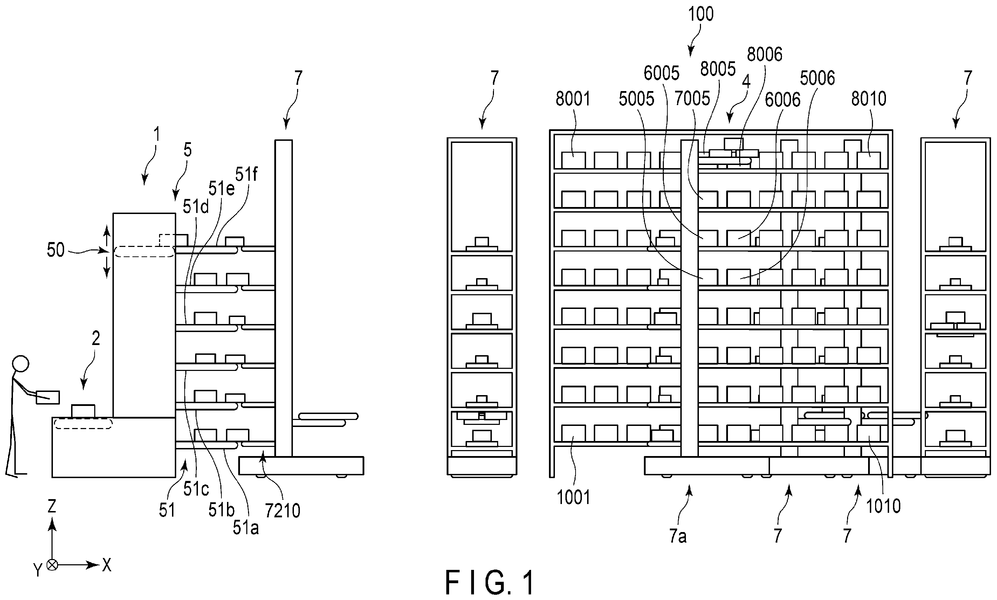

An article sorting system 100 according to a first embodiment will be described with reference to FIGS. 1 to 18.

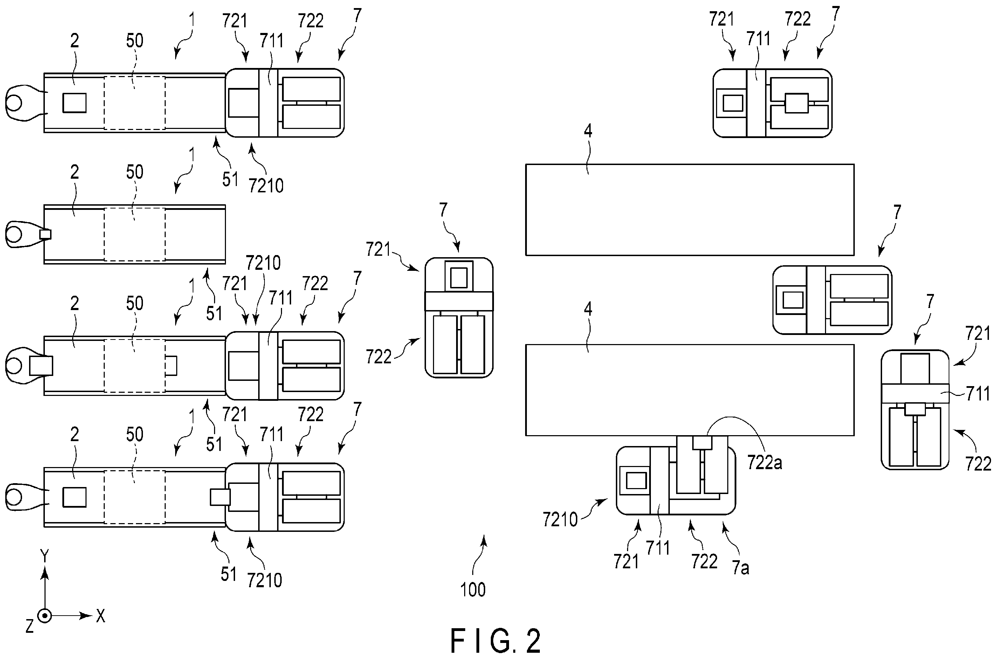

FIGS. 1 and 2 show the article sorting system 100 according to an embodiment. FIG. 1 is a right side view of the article sorting system 100, and FIG. 2 is a top view of the article sorting system 100.

As shown in FIGS. 1 and 2, an XYZ orthogonal coordinate system is defined for the article sorting system 100. As shown in FIGS. 1 and 2, a conveying apparatus 7 (described later) of the article sorting system 100 is oriented in an appropriate direction. Thus, while the XYZ orthogonal coordinate system related to the conveying apparatus 7 is used for the sake of simplicity of description, the X-axis direction and the Y-axis direction may be appropriately switched.

In the present embodiment, mainly an example in which articles are sorted into sorting destinations of a shelf portion 4 having a plurality of sorting destinations into which articles are sorted using the conveying apparatus moved to the position indicated by the reference numeral 7a among the conveying apparatuses 7 shown in FIGS. 1 and 2 will be described. The remaining conveying apparatuses 7 can also be moved in the same way as the conveying apparatus indicated by the reference numeral 7a.

FIGS. 1 and 2 show an example of a configuration of the article sorting system 100 according to the embodiment. The article sorting system 100 includes an input portion (induction) 1, a shelf portion 4 (sorting destination), a conveying apparatus 7, and the like. The number of input portions 1, shelf portions 4, and conveying apparatuses 7 of the article sorting system 100 is not limited.

In the present embodiment, four input portions 1 are arranged in the Y-axis direction on the floor surface. Two shelf portions 4 are arranged in the Y-axis direction on the floor surface so as to be spaced apart from each other. Eight conveying apparatuses 7 are arranged on the floor surface.

In the article sorting system 100, the article input portion 1, the shelf portion 4, and the conveying apparatus 7 are placed or fixed on the floor surface, and each article is sorted into a sorting destination. The article sorting system 100 transfers an article to a sorting destination of the shelf portion 4 using the input portion 1 and the conveying apparatus 7. That is, the article sorting system 100 reloads the article input to the input portion 1 on the conveying apparatus 7 and transfers the article from the conveying apparatus 7 to a sorting destination.

The article sorting system 100 according to the embodiment may be configured to be able to transfer an article from the input portion 1 to a sorting destination without using the conveying apparatus 7.

In the article sorting system 100, the input portion 1 includes an input port 2 and a sorter 5. The input portion 1 preferably has a singulator for aligning articles between the article input port 2 and the sorter 5 of the input portion 1.

The input portion 1 serves as an entrance for inputting articles into the article sorting system 100, and receives input of articles from, for example, a worker, a robot, or the like.

The input port 2 of the input portion 1 is formed by a conveyor that conveys articles along the X-axis direction, for example, and delivers the articles to an elevator 50 (described later) of the sorter 5.

A scanner 3 is arranged in the input portion 1. The scanner 3 reads a code attached to an article. The code is obtained by encoding an ID for identifying an article. The scanner 3 may read a character string of an ID attached to an article through character recognition processing (optical character recognition (OCR) processing) or the like.

Here, the scanner 3 reads the ID from the code of the article. The article is delivered from the input port 2 to the elevator 50 after the ID is read.

The article sorting system 100 conveys articles in the order of the input port 2 and the sorter 5.

The sorter 5 sorts articles based on the IDs of input articles. In the present embodiment, the sorter 5 includes the elevator (conveyor) 50 that moves up and down and differentiates articles into, herein, six floors (a plurality of floors), and delivery conveyors 51a to 51f that are arranged in the stopping positions of the elevator 50 on the six floors, respectively. The sorter 5 conveys articles input through the input port 2 and scanned by the scanner 3 to the delivery conveyors 51a to 51f on the respective floors via the elevator 50.

The elevator 50 is formed as a conveyor that moves up and down to the same height as the height of the input port 2 and the delivery conveyors 51a to 51f on the respective floors and delivers articles from the input port 2 to the delivery conveyors 51a to 51f on the respective floors.

The six delivery conveyors 51a to 51f are appropriately selected. The six delivery conveyors 51a to 51f are used in order, for example, from the first floor in the lowermost stage indicated by the reference numeral 51a to the sixth floor in the uppermost stage indicated by the reference numeral 51f.

For example, after the codes attached to articles are read by the scanner 3, the articles may be directly arranged on step portions 721a to 721f (described later) of the conveying apparatus 7 by using a worker or a robot without using the sorter 5.

When any one of the six delivery conveyors 51a to 51f is indicated hereinafter, for example, it may be representatively indicated by a reference numeral 51. Likewise, when any one of the step portions 721a to 721f is indicated hereinafter, for example, it may be representatively indicated by a reference numeral 7210.

The sorter 5 delivers articles one by one from the delivery conveyors 51a to 51f to the conveying apparatus 7. That is, the sorter 5 transfers articles onto the conveying apparatus 7. The delivery conveyors 51a to 51f may deliver articles to the conveying apparatus 7 at the same time after the articles are placed on all the delivery conveyors 51a to 51f, or may deliver articles to the conveying apparatus 7 immediately after the articles are placed on the delivery conveyors 51a to 51f.

The elevator 50 and the delivery conveyors 51a to 51f of the sorter 5 may be constituted, for example, by a cross belt, or by a tray and a pusher, or by other mechanisms. Here, the sorter 5 provided with a cross belt will be described as an example.

The delivery conveyors 51a to 51f of the sorter 5 may be configured such that cross belts are arranged side by side in the Y-axis direction. In this case, each of the delivery conveyors 51a to 51f may move one of the belts arranged in the Y-axis direction, or move both of the belts to transfer articles to a first transfer portion 721.

The number of delivery conveyors 51a to 51f is appropriately set. In the article sorting system 100, if the moving distance of the elevator 50 of the input portion 1 is increased, the time required for the elevator 50 to reach the delivery conveyor 51 from the input port 2 is increased. Thus, it is preferable that the number of floors of the delivery conveyor 51 be adjusted, that the input portions 1 be arranged, for example, in the Y-axis direction, and that the number of input portions 1 be adjusted.

While the case where each shelf portion 4 is formed in, herein, a substantially rectangular parallelepiped shape, for example, is shown as an example in the present embodiment, the shelf portion 4 may not be formed in a substantially rectangular parallelepiped shape. The shelf portions 4 are spaced apart from each other to a degree that allows the conveying apparatus 7 to move without touching the shelf portions 4. Likewise, the sorter 5 and each shelf portion 4 are spaced apart from each other to a degree that allows the conveying apparatus 7 to move without touching the shelf portions 4 and the sorter 5. The sorter 5 and each shelf portion 4 are preferably spaced apart from each other to a degree that, for example, allows at least two conveying apparatuses 7 to pass each other.

In the present embodiment, each shelf portion 4 has, for example, shelf boards 4a to 4h in eight stages. The number of shelf boards of the shelf portion 4 may be larger or smaller, but is preferably larger, than the number of elevators 50 of the sorters 5 and the number of step portions 721a to 721f (described later) of the conveying apparatuses 7.

In the present embodiment, for example, a substantially rectangular parallelepiped box with an opening on the upper side can be used as a sorting destination tray. As the sorting destination tray, for example, a substantially rectangular parallelepiped box with an opening on the upper side and an opening on one of four side surfaces can be used.

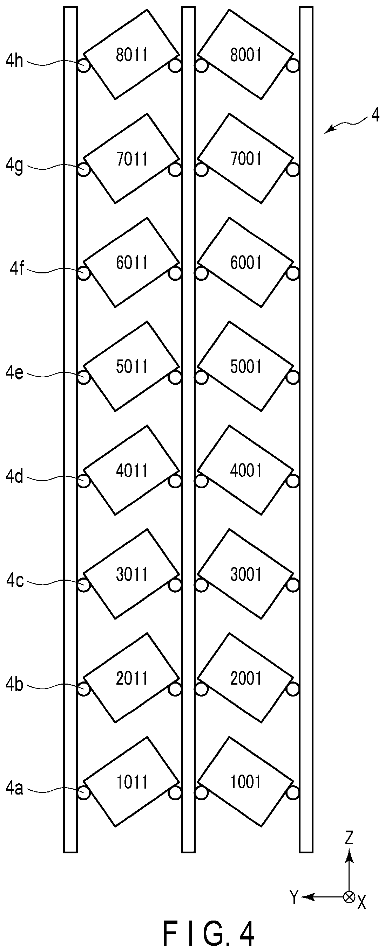

The shelf boards 4a to 4h of the shelf portion 4 may be actually formed in a board shape, or, instead of the board shape, may have a structure in which the sorting destination tray can be hooked on a bar, a rod, or the like extending in the X-axis direction, as illustrated in FIG. 4. In the present embodiment, the box as the sorting destination tray is supported by a pair of bars in an inclined manner. That is, the sorting destination tray is inclined such that the opening direction of the opening on the upper surface of the substantially rectangular parallelepiped box is oriented toward the upper outside of the shelf portion 4. As such, since the opening of each sorting destination tray is oriented in a direction in which an article is taken in and out, the article can be easily put into the box. The shape and orientation of the box as the sorting destination tray may be appropriately set.

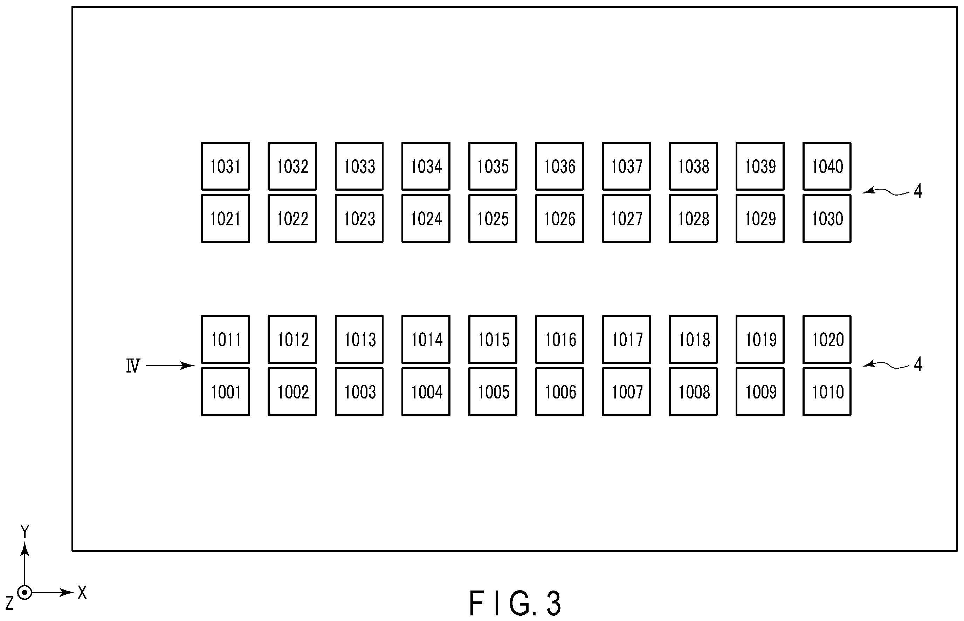

FIG. 3 is a schematic plan view of the sorting destinations of the shelf board 4a in the lowermost stage. The sorting destination tray (tote) is preferably placed in the sorting destinations. FIG. 4 shows the sorting destinations of the shelf boards 4a to 4h as viewed from a direction indicated by the reference numeral IV in FIG. 3.

As shown in FIG. 3, the shelf board 4a in the lowermost stage of one of the two shelf portions 4 has sorting destinations in a column indicated by reference numerals 1001 to 1010 along the X-axis direction and sorting destinations in a column indicated by reference numerals 1011 to 1020 likewise along the X-axis direction. The sorting destinations in the column indicated by the reference numerals 1001 to 1010 and the sorting destinations in the column indicated by the reference numerals 1011 to 1020 likewise along the X-axis direction are arranged in the Y-axis direction. Thus, 10 rows × 2 columns of sorting destination trays (totes) are supported on each of the shelf boards 4a to 4h.

As shown in FIG. 4, two sorting destination trays are supported in the Y-axis direction on each of the shelf boards 4a to 4h. Since each of the shelf portions 4 has eight stages, 160 sorting destinations are defined in each of the shelf portions 4 of the present embodiment. Therefore, a plurality of sorting destinations are defined by a plurality of stages at least in the height direction of the shelf portion 4. In the present embodiment, many sorting destinations are defined in the horizontal direction in addition to the height direction. It is preferable that the number of sorting destinations in the height direction of the shelf portion 4 can be increased to at least three or more stages.

An appropriate code such as a barcode or a QR code (registered trademark) is preferably attached to the sorting destination trays as the sorting destinations in order to distinguish the sorting destinations.

While an example in which the sorting destination tray is used as the sorting destination is described in the present embodiment, it is also preferable to use the upper surfaces of the shelf boards 4a to 4h of the shelf portion 4 as the sorting destinations. In this case, an appropriate code is attached to the upper surfaces of the shelf boards 4a to 4h.

In the present embodiment, articles are sorted into a plurality of sorting destinations 8005, 7005, 6006, and 5006 shown in FIG. 1. Such a plurality of sorting destinations are defined in the height direction of the shelf portion 4.

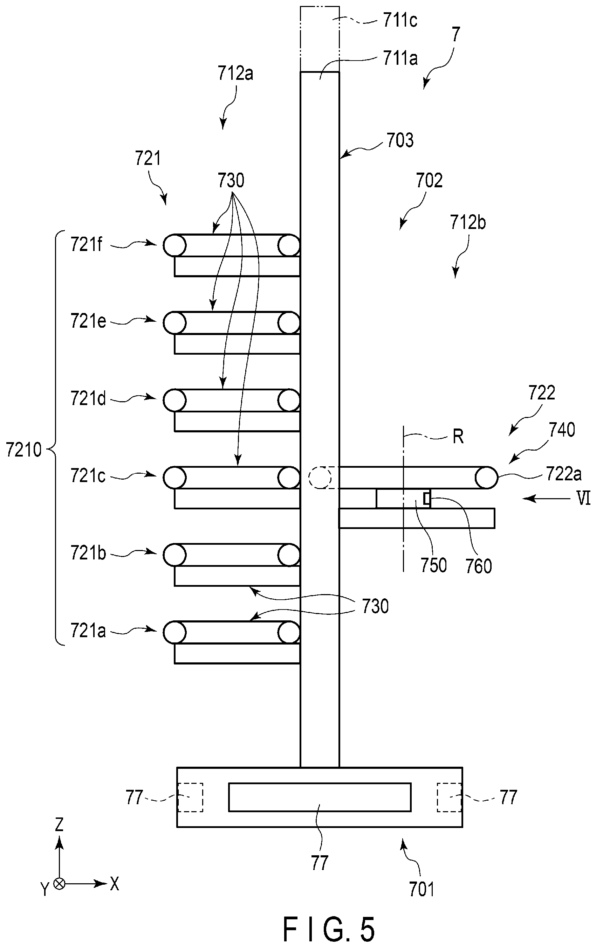

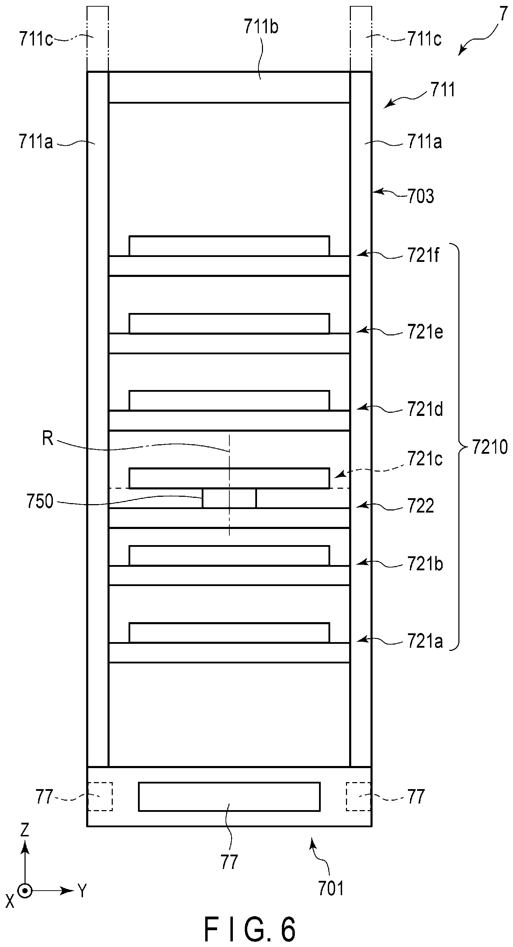

Next, the conveying apparatus 7 will be described. FIG. 5 is a schematic right side view of the conveying apparatus 7. FIG. 6 is a schematic view of the conveying apparatus 7 as viewed from a direction indicated by the reference numeral VI in FIG. 5.

The conveying apparatus 7 includes an automated guided vehicle portion (base) 701 that moves within a predetermined section, an article transfer portion 702, and a moving mechanism 703.

The automated guided vehicle portion 701 is a self-driving car that loads an article on the article transfer portion 702 and conveys the article. The automated guided vehicle portion 701 moves between the input portion 1 and the plurality of sorting destinations of the shelf portion 4 while placing one or more articles on the upper side of the automated guided vehicle portion 701.

The automated guided vehicle portion 701 includes a sensor 77. The sensor 77 is, for example, a plurality of reflection sensors. Each reflection sensor is mounted around the automated guided vehicle portion 701. Each reflection sensor, for example, emits a laser beam, detects a time from emission of the laser beam to a return of the laser beam reflected by an object, senses a distance to the object based on the detected time, and notifies a processor 71 (described later) of a sensing signal. The processor 71 outputs a control signal for controlling the travel of the conveying apparatus 7 based on the sensing signal from the sensor 77. For example, based on the sensing signal from the sensor 77, the processor 71 outputs a control signal for deceleration, stopping, or the like to avoid collision with the object. A camera may be provided as a type of the sensor 77, and the camera may capture an image of the surroundings and output the captured image to the processor 71. In this case, the processor 71 analyzes the captured image and outputs a control signal for deceleration, stopping, or the like to avoid collision with an object such as the shelf portion 4.

The traveling method of the automated guided vehicle portion 701 is the same as that of a general automated guided vehicle (AGV). For example, a route guidance method, an image recognition method such as a QR code, a simultaneous localization and mapping (SLAM) guidance method, or the like can be appropriately used as the traveling method of the conveying apparatus 7.

The article transfer portion 702 is arranged on the upper side of the automated guided vehicle portion 701. The article transfer portion 702 is extended upward. The article transfer portion 702 moves in tandem with the movement of the automated guided vehicle portion 701, and operates to transfer articles, for example, one by one, to sorting destinations selected from the plurality of sorting destinations.

The article transfer portion 702 includes a framework 711 above the automated guided vehicle portion 701, a first transfer portion 721 on the framework 711, and a second transfer portion 722 on the framework 711.

The framework 711 includes a pair of supporting columns 711a and a bar 711b connecting the supporting columns 711a. The pair of supporting columns 711a are extended upward, for example, from the upper surface of the automated guided vehicle portion 701. That is, the lower ends of the pair of supporting columns 711a are preferably fixed to, for example, the upper surface of the automated guided vehicle portion 701. The pair of supporting columns 711a may further couple a supporting column 711c, for example, between the pair of supporting columns 711a and the ceiling. In this case, the position of the bar 711b may be changed, for example, to the upper side. Then, the upper surface of a conveying surface of conveyors 742 and 744 of the second transfer portion 722, that is, the moving position of the uppermost end of the second transfer portion 722, can be set to the upper side closer to the ceiling side.

The framework 711 is formed in a substantially U-shape. The framework 711 forms a rectangular frame in cooperation with the upper surface of the automated guided vehicle portion 701. The upper end of the framework 711 is formed at an appropriate height such as about 6 m or higher from the floor surface. The framework 711 defines a first side 712a and a second side 712b. The first side 712a indicates a region in the - (minus) X-axis direction with respect to the framework 711 in FIG. 5, and the second side 712b indicates a region in the + (plus) X-axis direction with respect to the framework 711 in FIG. 5.

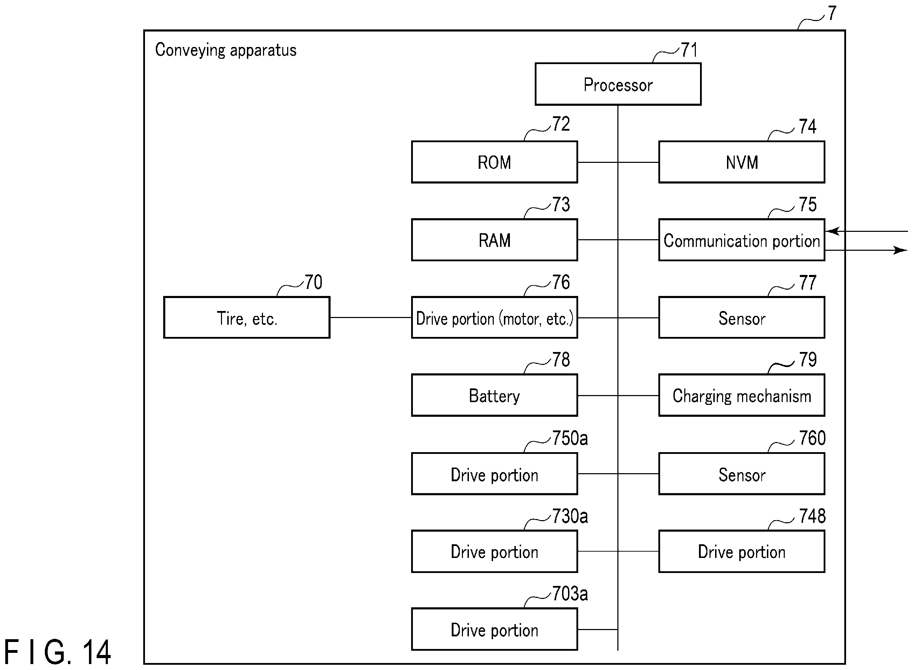

The first transfer portion 721 is arranged on the first side 712a above the automated guided vehicle portion 701. The first transfer portion 721 has a mechanism for transferring regularly shaped articles and/or irregularly shaped articles transferred to the first transfer portion 721 through the sorter 5 from the first transfer portion 721 to the second transfer portion 722 on the opposite side of where the articles are input by the input portion 1. The first transfer portion 721 has a plurality of step portions 721a to 721f in the vertical direction. At least one article may be placed on each of the step portions 721a to 721f. Needless to say, it is not necessary that at least one article be placed on each one or more of the step portions 721a to 721f. Also, articles need not be passed through one or more of the step portions 721a to 721f in order to deliver the articles to the second transfer portion 722. The number of step portions 721a to 721f is preferably the same as the number of floors of the delivery conveyors 51a to 51f of the sorter 5. Each of the step portions 721a to 721f is fixed to the pair of supporting columns 711a of the framework 711 extending above the automated guided vehicle portion 701. The step portions 721a to 721f of the first transfer portion 721 each include a first transferring mechanism 730 that transfers the articles transferred to the step portions 721a to 721f of the first transfer portion 721 to the second transfer portion 722. The first transferring mechanism 730 includes a drive portion 730a (see FIG. 14). Thus, by controlling the drive portion 730a, articles are delivered from one of the delivery conveyors 51a to 51f to one of the step portions 721a to 721f, as in the first transfer portion 721 of the conveying apparatus 7 shown in FIGS. 1 and 2.

While the intervals between the delivery conveyors 51a to 51f adjacent to each other in the vertical direction (Z-axis direction) are set to be equal distances in FIG. 5, these distances can be appropriately set. In this case, the intervals between the delivery conveyors 51a to 51f of the input portion 1, the stopping position of the elevator 50, and the like are also adjusted.

The second transfer portion 722 is arranged above the automated guided vehicle portion 701 and on the second side 712b on the opposite side of the framework 711 from the first side 712a.

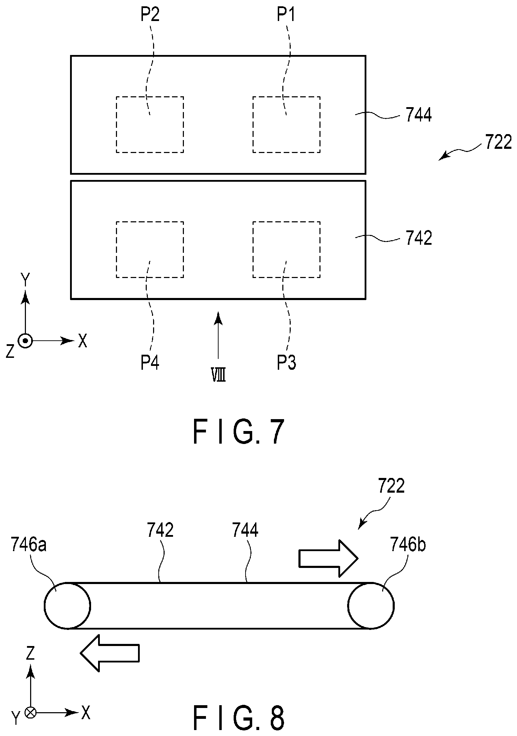

The second transfer portion 722 includes a second transferring mechanism 740 that is spaced apart from the first transfer portion 721 and transfers articles, for example, one by one, to sorting destinations selected from the plurality of sorting destinations. As shown in FIGS. 7 and 8, the second transferring mechanism 740 includes cross belts (conveyors) 742 and 744 that convey regularly shaped articles and/or irregularly shaped articles and transfer the articles to sorting destinations spaced apart from the first transfer portion 721, and includes rollers 746a and 746b.

The cross belts 742 and 744 are formed of a band-like endless belt formed in a ring shape. The cross belts 742 and 744 are formed with the rollers 746a and 746b, respectively. The cross belts 742 and 744 are supported by the rollers 746a and 746b in a state of being pulled with a predetermined tension.

The cross belts 742 and 744 are rotated when at least one of the rollers 746a and 746b is driven by a drive portion 748 (see FIG. 14). Each of the belts 742 and 744 has a size, along the conveying direction, such that, depending on their size, for example two articles can be placed thereon.

The two belts 742 and 744 arranged side by side can be driven by gears (not shown) so as to convey articles in two same directions, respectively, and can also be driven individually. For example, if the upper surface (conveyance surface) of the cross belt 742 moves in the + X-axis direction in FIGS. 7 and 8, the upper surface (conveyance surface) of the cross belt 744 stops or moves in the + X-axis direction. Likewise, if the upper surface (conveyance surface) of the cross belt 744 moves in the + X-axis direction in FIGS. 7 and 8, for example, the upper surface (conveyance surface) of the cross belt 742 stops or moves in the + X-axis direction. For example, if the upper surface (conveyance surface) of the cross belt 742 moves in the - X-axis direction in FIGS. 7 and 8, the upper surface (conveyance surface) of the cross belt 744 stops or moves in the - X-axis direction. Likewise, if the upper surface (conveyance surface) of the cross belt 744 moves in the - X-axis direction in FIGS. 7 and 8, for example, the upper surface (conveyance surface) of the cross belt 742 stops or moves in the - X-axis direction.

In the second transfer portion 722 according to the present embodiment, four articles P1 to P4 can be placed using the two cross belts 742 and 744, and one or more relatively large articles can be placed by being placed so as to straddle the two cross belts 742 and 744. Also, in the second transfer portion 722 according to the present embodiment, one to four articles can be placed and delivered.

As shown in FIGS. 5 and 6, the second transfer portion 722 has a rotation mechanism 750 that is rotatable about a rotation axis R in the vertical direction within a predetermined range. The rotation mechanism 750 includes a drive portion 750a (see FIG. 14). Therefore, as in the second transfer portion 722 of the conveying apparatus 7a shown in FIG. 2, a discharge end 722a of the second transfer portion 722 is directed toward a sorting destination selected from the plurality of sorting destinations of the shelf portion 4 by controlling the drive portion 750a of the rotation mechanism 750. In this manner, the second transfer portion 722 can match the conveying direction of the cross belts 742 and 744 with the direction in which articles are taken in and out in the sorting destinations of the shelf portion 4 without rotating the automated guided vehicle portion 701.

The second transfer portion 722 is provided with a moving mechanism 703 that moves up and down along the pair of supporting columns 711a of the pair of frameworks 711 by being driven by a drive portion 703a (see FIG. 14). The moving mechanism 703 moves with the movement of the automated guided vehicle portion 701. The moving mechanism 703 is used as a height adjustment mechanism that moves the article transfer portion 702 in the vertical direction to a height at which articles can be transferred, for example, one by one to sorting destinations selected from the plurality of sorting destinations of the shelf portion 4 with respect to the automated guided vehicle portion 701.

A mechanism that expands and contracts a shaft protruding from the upper surface of the automated guided vehicle portion 701, a mechanism that converts a rotational motion into a linear motion, or a mechanism similar to, for example, a mechanism used in an elevator may be used as the moving mechanism 703 that moves the second transfer portion 722 up and down. Here, as the moving mechanism 703, a mechanism similar to, for example, a mechanism used in an elevator is provided on the pair of supporting columns 711a of the framework 711 to move the second transfer portion 722 up and down.

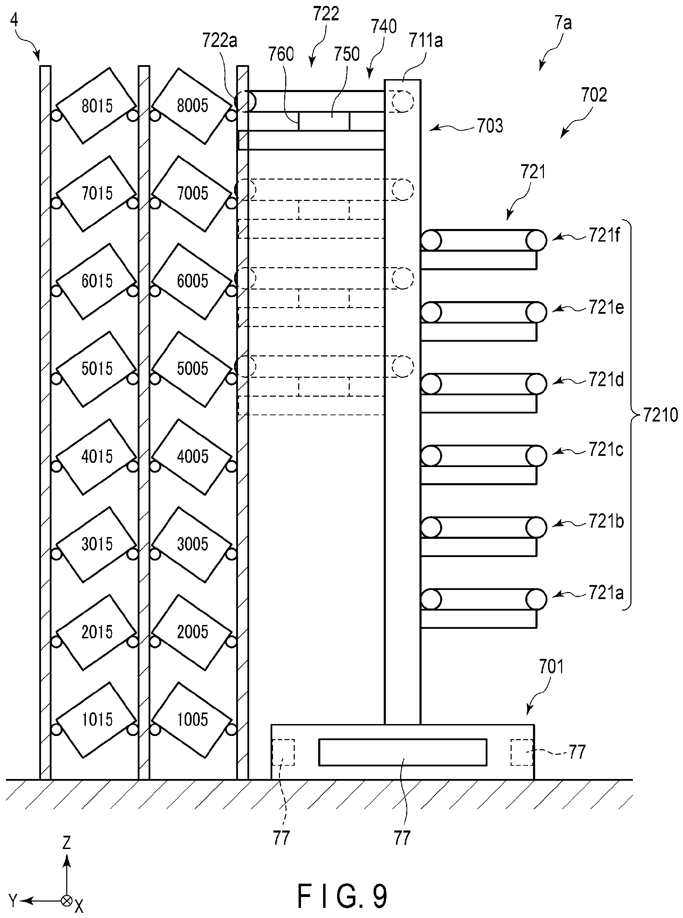

As shown in FIG. 9, the second transfer portion 722 can be raised to a position where the second transfer portion 722 can transfer articles through the openings of the sorting destination trays placed on the shelf board 4h in the uppermost stage (the eighth stage) of the shelf portion 4. Also, the second transfer portion 722 can be lowered to a position where the second transfer portion 722 can transfer articles through the openings of the sorting destination trays in the lowermost stage (the first stage) of the shelf portion 4. Therefore, the second transfer portion 722 can transfer the articles placed on the second transfer portion 722 to appropriate sorting destination trays on the shelf boards 4a to 4h between the sorting destination trays in the uppermost stage (the eighth stage) of the shelf portion 4 and the sorting destination trays in the lowermost stage (the first stage) of the shelf portion 4.

The conveying apparatus 7 stands by in a position where the conveying apparatus 7 can receive articles from the sorter 5. When the conveying apparatus 7 receives articles on the first transfer portion 721 having the plurality of step portions 721a to 721f, for example, the conveying apparatus 7 moves to a position where the conveying apparatus 7 can transfer the articles to selected sorting destinations of the shelf boards 4a to 4h. When the conveying apparatus 7 moves to this position, the conveying apparatus 7 transfers the articles, for example, one by one to the sorting destinations.

The conveying apparatus 7 includes a sensor 760 that obtains information on a sorting destination selected from the plurality of sorting destinations of the shelf portion 4. The sensor 760 functions as a scanner that reads, for example, a code or a character string attached to the shelf portion 4. For example, the sensor 760 is provided in the rotation mechanism 750 of the second transfer portion 722. The sensor 760 is preferably rotated so as to face the same direction as the discharge end 722a through the rotation of the rotation mechanism 750 of the second transfer portion 722 about the vertical axis R.

In the conveying apparatus 7 according to the present embodiment, articles are normally delivered from one of the delivery conveyors 51a to 51f of the sorter 5 to the second transfer portion 722 via the first transfer portion 721. Articles are also preferably directly delivered from the delivery conveyors 51a to 51f of the sorter 5 to the second transfer portion 722 without using the first transfer portion 721. In this case, the second transfer portion 722 is adjacent to the sorter 5, and the first transfer portion 721 is more distant from the sorter 5 than the second transfer portion 722.

Next, a control system of the article sorting system 100 will be described.

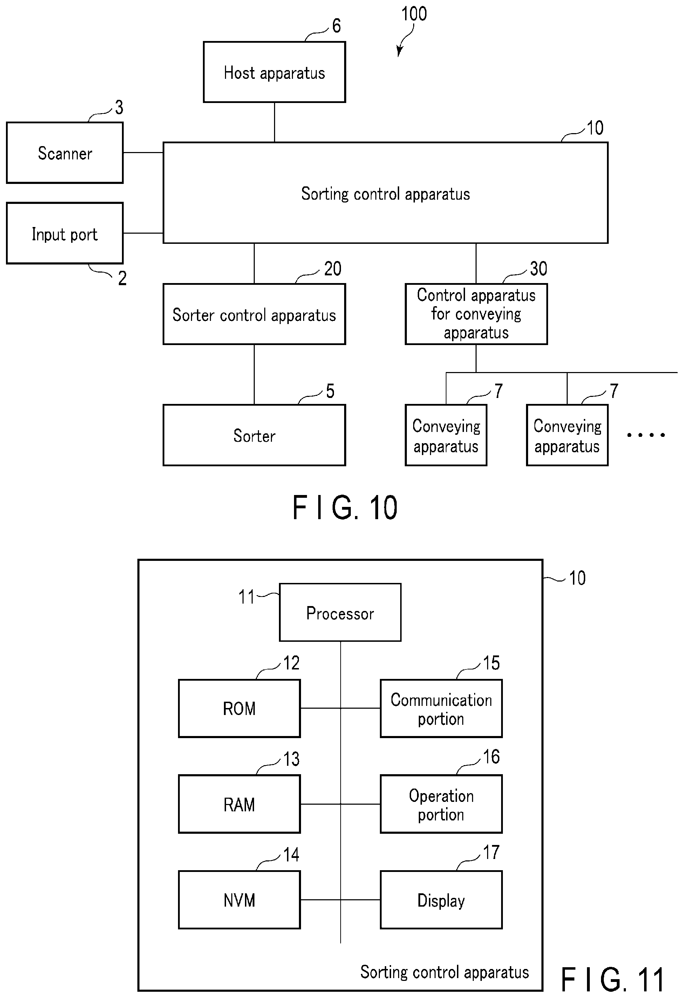

FIG. 10 is a block diagram showing an example of a configuration of a control system of the article sorting system 100. As shown in FIG. 10, the article sorting system 100 includes the input port 2, the scanner 3, the sorter 5, a host apparatus 6, the conveying apparatus 7, a sorting control apparatus 10, a sorter control apparatus 20, a control apparatus 30 for the conveying apparatus 7, and the like.

The sorting control apparatus 10 (information processing apparatus) is connected to the input port 2, the scanner 3, the host apparatus 6, the sorter control apparatus 20, and the control apparatus 30 for the conveying apparatus 7. The sorter control apparatus 20 is connected to the sorter 5. The control apparatus 30 for the conveying apparatus 7 is connected to the conveying apparatus 7.

The host apparatus (external apparatus) 6 transmits sorting destination information indicating an article and a sorting destination (destination) of the article to the sorting control apparatus 10. The sorting destination information from the host apparatus 6 will be described later.

For example, the host apparatus 6 is a warehouse management system (WMS). For example, the host apparatus 6 is constituted by a PC or the like.

The sorting control apparatus 10 controls the sorter 5 and the conveying apparatus 7 according to the sorting destination information from the host apparatus 6. The sorting control apparatus 10 controls the sorter 5 through the sorter control apparatus 20. The sorting control apparatus 10 also controls the conveying apparatus 7 through the control apparatus 30 for the conveying apparatus 7. For example, the sorting control apparatus 10 is a warehouse execution system (WES). The sorting control apparatus 10 will be described later.

The sorter control apparatus 20 controls the sorter 5 according to a control signal from the sorting control apparatus 10. The sorter control apparatus 20 functions as a controller for the sorter 5. For example, the sorter control apparatus 20 is a warehouse control system (WCS). The sorter control apparatus 20 will be described later.

The control apparatus 30 for the conveying apparatus 7 controls the conveying apparatus 7 according to a control signal from the sorting control apparatus 10. The control apparatus 30 for the conveying apparatus 7 functions as a controller of the conveying apparatus 7. For example, the control apparatus 30 for the conveying apparatus 7 is a WCS. The control apparatus 30 for the conveying apparatus 7 will be described later.

The article sorting system 100 may include other configurations as necessary in addition to the configurations illustrated in FIGS. 1 and FIG 2, or a specific configuration may be excluded from the article sorting system 100.

Next, the sorting control apparatus 10 will be described. FIG. 11 is a block diagram showing an example of a configuration of the sorting control apparatus 10.

As shown in FIG. 11, the sorting control apparatus 10 includes at least one processor 11, ROM 12, RAM 13, NVM 14, communication portion 15, operation portion 16, display 17, and the like. The processor 11 and the ROM 12, the RAM 13, the NVM 14, the communication portion 15, the operation portion 16, and the display 17 are connected to each other via a data bus or the like.

The sorting control apparatus 10 may include other configurations as necessary in addition to the configuration illustrated in FIG. 11, or a specific configuration may be excluded from the sorting control apparatus 10.

The processor 11 has a function of controlling the overall operation of the sorting control apparatus 10. The processor 11 may include an internal cache, various interfaces, and the like. The processor 11 realizes various types of processing by executing a program(s) stored in advance in an internal memory, the ROM 12, or the NVM 14.

Some of the various functions realized by the processor 11 executing the program(s) may be realized by a hardware circuit. In this case, the processor 11 controls the functions performed by the hardware circuit.

The ROM 12 is a nonvolatile memory in which a control program, control data, and the like are stored in advance. The control program and control data stored in the ROM 12 are incorporated in advance according to the specifications of the sorting control apparatus 10.

The RAM 13 is a volatile memory. The RAM 13 temporarily stores data, etc., that are being processed by the processor 11. The RAM 13 stores various application programs based on instructions from the processor 11. The RAM 13 may also store data necessary for executing an application program, a result of executing the application program, and the like.

The NVM 14 is a data-writable and data-rewritable nonvolatile memory. The NVM 14 is constituted by, for example, a hard disk drive (HDD), a solid stage drive (SSD), a flash memory, or the like. The NVM 14 stores a control program, an application, and various kinds of data according to the operation purpose of the sorting control apparatus 10.

The communication portion 15 is an interface for communicating with the input port 2, the scanner 3, the host apparatus 6, the sorter control apparatus 20, the control apparatus 30 for the conveying apparatus 7, and the like. For example, the communication portion 15 is an interface for transmitting and receiving data to and from the scanner 3, the host apparatus 6, the sorter control apparatus 20, the control apparatus 30 for the conveying apparatus 7, and the like via a network. The communication portion 15 is connected to the sorter 5 via the sorter control apparatus 20. The communication portion 15 is also connected to the conveying apparatus 7 via the control apparatus 30 for the conveying apparatus 7. For example, the communication portion 15 is an interface for supporting wired or wireless local area network (LAN) connection.

The communication portion 15 functions as an interface for controlling the sorter 5 and the conveying apparatus 7.

The communication portion 15 may be constituted by an interface for communicating with the input port 2, an interface for communicating with the scanner 3, an interface for communicating with the host apparatus 6, an interface for communicating with the sorter control apparatus 20, and an interface for communicating with the control apparatus 30 for the conveying apparatus 7.

The operation portion 16 receives inputs of various operations from the operator. The operation portion 16 transmits signals indicating the input operations to the processor 11. The operation portion 16 may be constituted by a touch panel.

The display 17 displays image data from the processor 11. For example, the display 17 is constituted by a liquid crystal monitor. In the case where the operation portion 16 is constituted by a touch panel, the display 17 may be formed integrally with the operation portion 16.

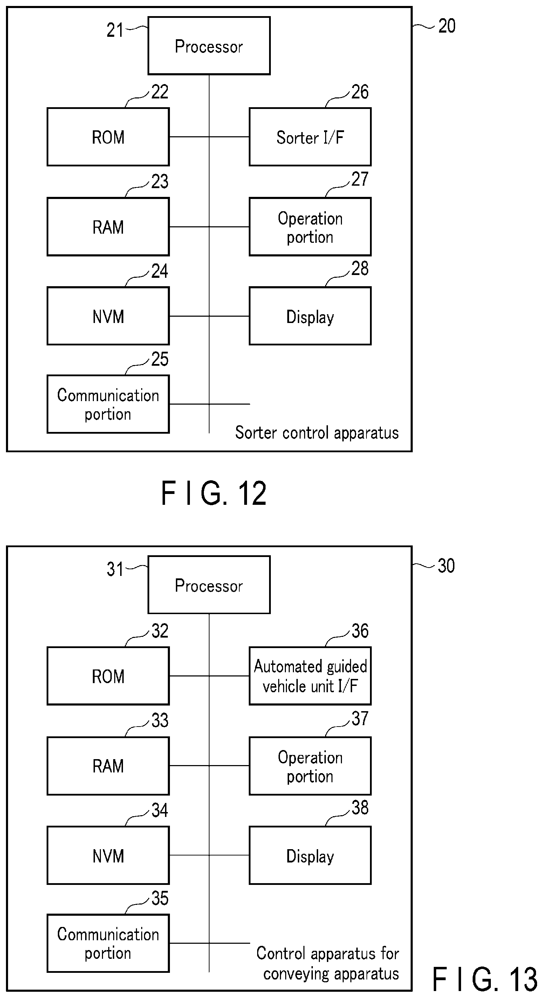

Next, the sorter control apparatus 20 will be described. FIG. 12 is a block diagram showing an example of a configuration of the sorter control apparatus 20.

As shown in FIG. 12, the sorter control apparatus 20 includes at least one processor 21, ROM 22, RAM 23, NVM 24, communication portion 25, sorter interface 26, operation portion 27, display 28, and the like. The processor 21 and the ROM 22, the RAM 23, the NVM 24, the sorter interface 26, the communication portion 25, the operation portion 27, and the display 28 are connected to each other via a data bus or the like.

The sorter control apparatus 20 may include other configurations as necessary in addition to the configuration illustrated in FIG. 12, or a specific configuration may be excluded from the sorter control apparatus 20.

The processor 21 has a function of controlling the overall operation of the sorter control apparatus 20. The processor 21 may include an internal cache, various interfaces, and the like. The processor 21 realizes various types of processing by executing a program(s) stored in advance in an internal memory, the ROM 22, or the NVM 24.

Some of the various functions realized by the processor 21 executing the program(s) may be realized by a hardware circuit. In this case, the processor 21 controls the functions performed by the hardware circuit.

The ROM 22 is a nonvolatile memory in which a control program, control data and the like are stored in advance. The control program and control data stored in the ROM 22 are incorporated in advance according to the specifications of the sorter control apparatus 20.

The RAM 23 is a volatile memory. The RAM 23 temporarily stores data, etc., that are being processed by the processor 21. The RAM 23 stores various application programs based on instructions from the processor 21. The RAM 23 may also store data necessary for executing an application program, a result of executing the application program, and the like.

The NVM 24 is a data-writable and data-rewritable nonvolatile memory. The NVM 24 is constituted by, for example, an HDD, an SSD, a flash memory, or the like. The NVM 24 stores a control program, an application, and various kinds of data according to the operation purpose of the sorter control apparatus 20.

The communication portion 25 is an interface for communicating with the sorting control apparatus 10 and the like. For example, the communication portion 25 is an interface for transmitting and receiving data to and from the sorting control apparatus 10 and the like through a network. For example, the communication portion 25 is an interface that supports a wired or wireless LAN connection.

The sorter interface 26 is an interface for communicating with the sorter 5.

The operation portion 27 receives inputs of various operations from the operator. The operation portion 27 transmits signals indicating the input operations to the processor 21. The operation portion 27 may be constituted by a touch panel.

The display 28 displays image data from the processor 21. For example, the display 28 is constituted by a liquid crystal monitor. In the case where the operation portion 27 is constituted by a touch panel, the display 28 may be formed integrally with the operation portion 27.

The communication portion 25 and the sorter interface 26 may be integrally formed.

The processor 21 controls the sorter 5 according to a control signal from the sorting control apparatus 10. For example, the processor 21 causes the sorter 5 to sort a predetermined article into a selected predetermined one of the delivery conveyors 51a to 51f. For example, the processor 21 causes the elevator 50 to move up and down, and causes the conveyor of the elevator 50 to operate at a timing when the article placed on the elevator 50 reaches one of the delivery conveyors 51a to 51f, to deliver the article from the elevator 50 to one of the delivery conveyors 51a to 51f.

Next, the control apparatus 30 for the conveying apparatus 7 will be described. FIG. 13 is a block diagram showing an example of a configuration of the control apparatus 30 for the conveying apparatus 7. As shown in FIG. 13, the control apparatus 30 for the conveying apparatus 7 includes at least one processor 31, ROM 32, RAM 33, NVM 34, communication portion 35, conveying apparatus interface 36, operation portion 37, display 38, and the like. The processor 31 and the ROM 32, the RAM 33, the NVM 34, the conveying apparatus interface 36, the communication portion 35, the operation portion 37, and the display 38 are connected to each other via a data bus or the like.

The control apparatus 30 for the conveying apparatus 7 may include other configurations as necessary in addition to the configuration illustrated in FIG. 13, or a specific configuration may be excluded from the control apparatus 30 for the conveying apparatus 7.

The processor 31 has a function of controlling the overall operation of the control apparatus 30 for the conveying apparatus 7. The processor 31 may include an internal cache, various interfaces, and the like. The processor 31 realizes various types of processing by executing a program(s) stored in advance in an internal memory, the ROM 32, or the NVM 34.

Some of the various functions realized by the processor 31 executing the program(s) may be realized by a hardware circuit. In this case, the processor 31 controls the functions performed by the hardware circuit.

The ROM 32 is a nonvolatile memory in which a control program, control data and the like are stored in advance. The control program and control data stored in the ROM 32 are incorporated in advance according to the specifications of the control apparatus 30 for the conveying apparatus 7.

The RAM 33 is a volatile memory. The RAM 33 temporarily stores data, etc., that are being processed by the processor 31. The RAM 33 stores various application programs based on instructions from the processor 31. The RAM 33 may also store data necessary for executing an application program, a result of executing the application program, and the like.

The NVM 34 is a data-writable and data-rewritable nonvolatile memory. The NVM 34 is constituted by, for example, an HDD, an SSD, a flash memory, or the like. The NVM 34 stores a control program, an application, and various kinds of data according to the operation purpose of the control apparatus 30 for the conveying apparatus 7.

The communication portion 35 is an interface for communicating with the sorting control apparatus 10 and the like. For example, the communication portion 35 is an interface for transmitting and receiving data to and from the sorting control apparatus 10 and the like through a network. For example, the communication portion 35 is an interface that supports a wired or wireless LAN connection.

The conveying apparatus interface 36 is an interface for communicating with the conveying apparatus 7. The conveying apparatus interface 36 is wirelessly connected to the conveying apparatus 7. For example, the conveying apparatus interface 36 may support a wireless LAN connection.

The operation portion 37 receives inputs of various operations from the operator. The operation portion 37 transmits signals indicating the input operations to the processor 31. The operation portion 37 may be constituted by a touch panel.

The display 38 displays image data from the processor 31. For example, the display 38 is constituted by a liquid crystal monitor. In the case where the operation portion 37 is constituted by a touch panel, the display 38 may be formed integrally with the operation portion 37.

The communication portion 35 and the conveying apparatus interface 36 may be integrally formed.

The processor 31 controls the conveying apparatus 7 according to a control signal from the sorting control apparatus 10. For example, the processor 31 causes the conveying apparatus 7 to move to the article receiving position of the input portion 1. The processor 31 causes the conveying apparatus 7 to operate so as to load an article. The processor 31 also causes the conveying apparatus 7 to transfer the article to the sorting destination.

Next, the control system of the conveying apparatus 7 will be described. FIG. 14 is a block diagram showing an example of a configuration of the conveying apparatus 7. The control system of the conveying apparatus 7 includes at least one processor 71, ROM 72, RAM 73, NVM 74, communication portion 75, drive portion 76, sensor 77, battery 78, charging mechanism 79, tire 70, and the like. The control system of the conveying apparatus 7 further includes drive portions 703a, 730a, 748, and 750a and a sensor 760.

The conveying apparatus 7 may include other configurations as necessary in addition to the configuration illustrated in FIG. 14, or a specific configuration may be excluded from the conveying apparatus 7.

The processor 71 has a function of controlling the operation of the conveying apparatus 7. The processor 71 may include an internal cache, various interfaces, and the like. The processor 71 realizes various types of processing by executing a program(s) stored in advance in an internal memory, the ROM 72, or the NVM 74.

For example, the processor 71 is a central processing unit (CPU). The processor 71 may be realized by hardware such as a large-scale integrated circuit (LSI), an application specific integrated circuit (ASIC), or a field-programmable gate array (FPGA).

The ROM 72 is a non-transitory computer-readable storage medium and stores the above-described programs. The ROM 72 stores data for use by the processor 71 to perform various kinds of processing, various setting values, etc. The RAM 73 is a memory for data read and data write. The RAM 73 is used as a so-called work area or the like for storage of data for temporary use by the processor 71 to perform various processes.

The NVM 74 is a non-transitory computer-readable storage medium and may store the above-described programs. The NVM 74 also stores data for use by the processor 71 to perform various kinds of processing, data generated through the processing performed by the processor 71, various setting values, etc.

The communication portion 75 is an interface that transmits and receives data to and from the control apparatus 30 for the conveying apparatus 7 or the like through a wireless LAN access point or the like. For example, the communication portion 75 supports a wireless LAN connection.

The drive portion 76 is a motor or the like, and the motor is rotated or stopped based on a drive signal output from the processor 71. The power of the motor is transmitted to the tire 70, which moves the automated guided vehicle portion 701, and then transmitted to a steering mechanism (not shown). The conveying apparatus 7 is moved to a target position by the power from the motor.

Based on the sensing signal from the sensor 77 of the automated guided vehicle portion 701, the processor 71 outputs a control signal for deceleration, stopping, or the like to avoid collision with the object. A camera may be provided in addition to the sensor 77, and the camera may capture an image of the surroundings and output the captured image to the processor 71. In this case, the processor 71 analyzes the captured image and outputs a control signal for deceleration, stopping, or the like to avoid collision with the object.

The battery 78 supplies necessary electric power to the drive portion 76 and the like. The charging mechanism 79 is a mechanism that connects a charging station with the battery 78, and the battery 78 is charged with electric power supplied from the charging station or the like through the charging mechanism 79.

The conveying apparatus 7 includes the drive portion 730a for the first transfer portion 721, the drive portion 748 for the second transfer portion 722, the drive portion 750a for the rotation mechanism 750, and the drive portion 703a for the moving mechanism 703. The drive portions 703a, 730a, 748, and 750a are motors or the like, and the motors are rotated or stopped based on a drive signal output from the processor 71.

The drive portion 703a of the moving mechanism 703 moves/stops the second transfer portion 722 in the vertical direction.

When the drive portion 730a of the first transfer portion 721 and the drive portion 748 of the second transfer portion 722 are driven, the belts of the belt conveyors are operated. Among them, the drive portion 730a of the first transfer portion 721 operates/stops the six step portions 721a to 721f together or individually using a gear. For example, if there are two belts 742 and 744, the drive portion 748 of the second transfer portion 722 operates/stops the two belts together or individually using a gear.

The drive portion 750a of the rotation mechanism 750 rotates the second transfer portion 722 in an appropriate direction.

The processor 71 performs processing such as calculation and control necessary for movement of the conveying apparatus 7, that is, acceleration, deceleration, stopping, changing direction of the automated guided vehicle portion 701, and operation of the first transfer portion 721, the second transfer portion 722, the moving mechanism 703, and the rotation mechanism 750 of the conveying apparatus 7. The processor 71 executes a program stored in the ROM 72, the NVM 74, or the like based on a control signal from the control apparatus 30 for the conveying apparatus 7 or the like, thereby generating a drive signal and outputting the drive signal to each unit.

For example, the control apparatus 30 for the conveying apparatus 7 transmits a control signal for moving the conveying apparatus 7 to the article receiving position opposed to the input portion 1 shown in FIG. 1. The control apparatus 30 for the conveying apparatus 7 transmits a control signal for moving the conveying apparatus 7 to the sorting destinations. The control apparatus 30 for the conveying apparatus 7 also transmits a control signal for operating the first transfer portion 721, the second transfer portion 722, and the moving mechanism 703.

The processor 71 of the conveying apparatus 7 outputs a drive signal corresponding to the control signal transmitted from the control apparatus 30 for the conveying apparatus 7. Thus, the conveying apparatus 7 moves from the current position to the article receiving position. When the conveying apparatus 7 receives a plurality of articles from the sorter 5 at the receiving position, the conveying apparatus 7 moves to the transferring position with the plurality of articles loaded thereon. The conveying apparatus 7 transfers the articles, for example, one by one to the selected sorting destinations in the transferring position.

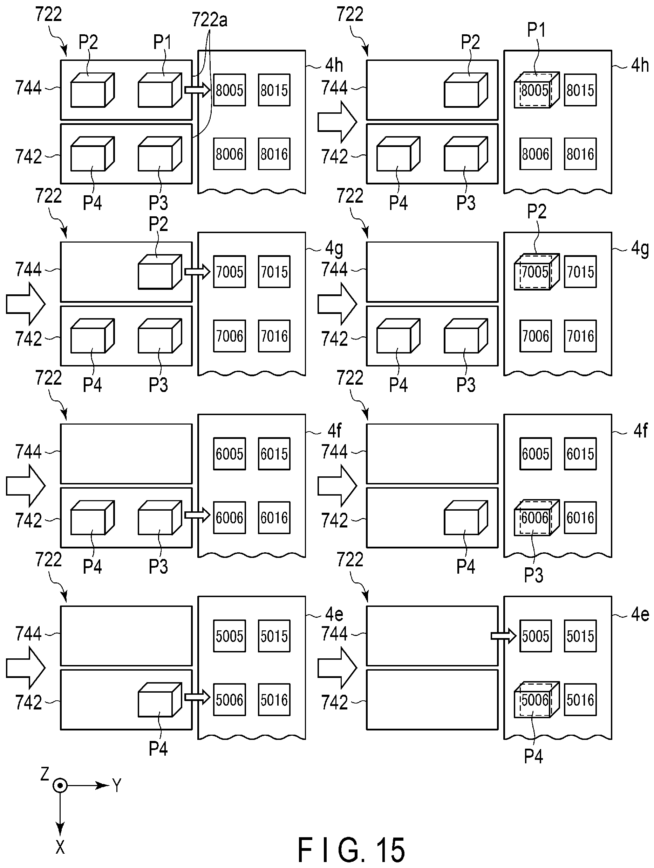

Next, functions realized by the sorting control apparatus 10 will be described. For the sake of simplicity, FIG. 15 shows an example in which four articles are sequentially sorted into positions indicated by reference numerals 8005, 7005, 6006, 5006 as sorting destinations. In FIG. 15, the automated guided vehicle portion 701, the framework 711, and the first transfer portion 721 of the conveying apparatus 7a (see FIGS. 1 and 2) are not shown, and a relationship between the second transfer portion 722 and the shelf boards 4e to 4h of the shelf portion 4 is shown. The discharge end 722a of the second transfer portion 722 in FIG. 15 is directed in the Y-axis direction so as to face the sorting destinations of the shelf portion 4 by controlling the drive portion 750a of the rotation mechanism 750. FIG. 9 is a schematic diagram showing a movement of the second transfer portion 722 at the height position in the process shown in FIG. 15.

Herein, the processor 11 (see FIG. 11) of the sorting control apparatus 10 controls the sorter control apparatus 20 (see FIG. 12), the control apparatus 30 for the conveying apparatus 7 (see FIG. 13), and the conveying apparatus 7 (see FIG. 14) for the sake of simplicity of explanation. The processor 11 controls the automated guided vehicle portion 701 to move to a position facing a selected one of the plurality of sorting destinations of the shelf portion 4, and controls the article transfer portion 702 and the moving mechanism 703 so as to transfer articles, for example, one by one or simultaneously to the sorting destination.

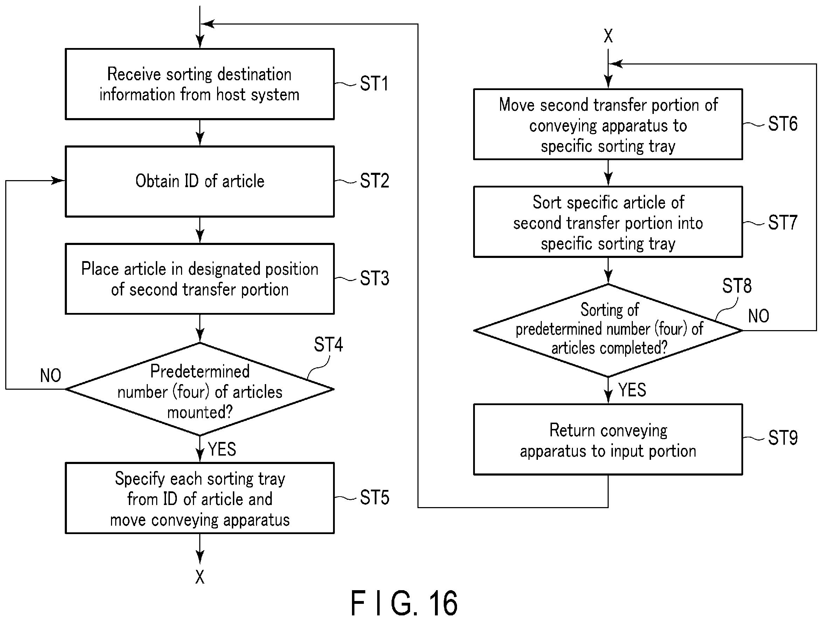

Herein, an example in which four articles are placed directly from the sorter 5 on the second transfer portion 722 of the conveying apparatus 7 and the articles are transferred from the second transfer portion 722 to the sorting destinations of the shelf portion 4 will be described first with reference to the flowchart shown in FIG. 16. At this time, the second transfer portion 722 of the conveying apparatus 7 is adjacent to the delivery conveyors 51a to 51f of the sorter 5, and the first transfer portion 721 is spaced apart from the second transfer portion 722 (not shown). That is, one of the conveying apparatuses 7 is made to stand by in a state where the second transfer portion 722 of the conveying apparatus 7 faces the sorter 5 and the first transfer portion 721 is spaced apart from the sorter 5. At this time, the input port 2 of the input portion 1, the elevator 50 of the sorter 5, the delivery conveyors 51a to 51f, the second transfer portion 722, and the first transfer portion 721 are arranged along the X-axis direction. The first transfer portion 721 may not be present. In addition, the delivery conveyors 51a to 51f are configured to have two belts arranged in the Y-axis direction and to place articles separately on the belts 742 and 744 of the second transfer portion 722.

The functions realized by the sorting control apparatus 10 are realized by the processor 11 executing the programs stored in an internal memory, the ROM 12, the NVM 14, or the like.

First, the processor 11 receives the sorting destination information 8005, 7005, 6006, and 5006 from the host apparatus 6 through the communication portion 15 (step ST1). The processor 11 may transmit a request for the sorting destination information to the host apparatus 6 through the communication portion 15.

As described above, the sorting destination information indicates the sorting destination of an article. In the present embodiment, one sorting destination tray as a sorting destination is selected for one article.

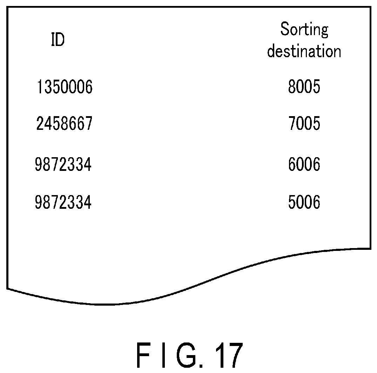

FIG. 17 shows an example of a configuration of the sorting destination information. As shown in FIG. 17, the sorting destination information stores a record in which an "ID" and a "sorting destination" are associated with each other. The "ID" is an identifier for specifying an article to be sorted. In this example, the "ID" is indicated by a numerical value. The "sorting destination" indicates the sorting destination of the corresponding article. The "sorting destination" corresponds to the tray (sorting container) of the shelf portion 4. That is, the "sorting destination" is information with which the processor 11 of the sorting control apparatus 10 can specify a sorting container to which an article is transferred. For example, the "sorting destination" is an identifier for specifying a sorting destination tray. The "sorting destination" may be an address (or a part of an address).

The configuration of the sorting destination information is not limited to a specific configuration.

Herein, it is assumed that an article to be sorted is put in the input portion 1.

The processor 11 reads the ID of the article put in the input portion 1 by using a scanner 3 such as a bar code reader (step ST2).

The processor 11 may obtain the ID of the article from the scanner 3. The processor 11 may obtain an image from the scanner 3 and decode a code shown on the image to obtain the ID.

The processor 11 controls the drive portion 703a of the moving mechanism 703 to cause the second transfer portion 722 to move up and down, and, for example, match the height of the lowermost delivery conveyor 51a with the height of the belts 742 and 744 of the second transfer portion 722. The processor 11 then controls the drive portion of the delivery conveyor 51a and the drive portion 748 of the second transfer portion 722 to cause the article P1 to be transferred onto one (belt 744) of the cross belts 742 and 744 of the second transfer portion 722. At this time, the article P1 is disposed closer to the delivery conveyor 51a of the sorter 5 than the center in the X-axis direction of one (belt 744) of the belts 742 and 744 adjacent in the Y-axis direction. In this manner, the processor 11 places the article in the designated position of the second transfer portion 722 (step ST3).

Upon presenting an output indicating, for example, that a predetermined number (four in this case) of articles P1 to P4 (see FIG. 15) are not appropriately placed on the second transfer portion 722 (step ST4-No), the processor 11 obtains the ID of the article P2 to be subsequently put in the input portion 1 (step ST2) and causes the article P2 to be placed on the second transfer portion 722.

The processor 11 controls the drive portion 703a of the moving mechanism 703 to cause the second transfer portion 722 to move up and down, and, for example, match the height of the delivery conveyor 51b in the second stage from the bottom with the height of the belts 742 and 744. The processor 11 then controls the delivery conveyor 51b and the drive portion 748 of the second transfer portion 722 to cause the article P2 to be transferred onto the belt 744, which is one of the belts. At this time, the article P2 is disposed closer to the delivery conveyor 51b of the sorter 5 than the center of the belt 744 in the X-axis direction. Thus, the two articles P1 and P2 are placed on the belt 744, which is one of the belts, with the center of the belt 744 in the X-axis direction interposed therebetween. In this manner, the processor 11 places, for example, the two articles P1 and P2 in the designated positions of the belt 744 of the second transfer portion 722 (step ST3).

Upon presenting an output indicating that a predetermined number (four in this case) of articles P1 to P4 (see FIG. 15) are not appropriately placed on the second transfer portion 722 (step ST4-No), the processor 11 obtains the ID of the article P3 to be subsequently put in the input portion 1 (step ST2) and causes the article P3 to be placed on the second transfer portion 722.

The processor 11 controls the drive portion 703a of the moving mechanism 703 to cause the second transfer portion 722 to move up and down, and, for example, match the height of the delivery conveyor 51c in the third stage from the bottom with the height of the belts 742 and 744 of the second transfer portion 722. The processor 11 then controls the delivery conveyor 51c and the drive portion 748 of the second transfer portion 722 to cause the article P3 to be transferred onto the other belt 742. At this time, the article P3 is disposed closer to the delivery conveyor 51c of the sorter 5 than the center in the X-axis direction of the other (belt 742) of the belts 742 and 744 adjacent in the Y-axis direction. In this manner, the processor 11 places the article P3 in the designated position of the second transfer portion 722 (step ST3).

Upon presenting an output indicating that a predetermined number (four in this case) of articles P1 to P4 (see FIG. 15) are not appropriately placed on the second transfer portion 722 (step ST4-No), the processor 11 obtains the ID of the article P4 to be subsequently put in the input portion 1 (step ST2) and causes the article P4 to be placed on the second transfer portion 722.

The processor 11 controls the drive portion 703a of the moving mechanism 703 to cause the second transfer portion 722 to move up and down, and, for example, match the height of the delivery conveyor 51d in the fourth stage from the bottom with the height of the belts 742 and 744. The processor 11 then controls the delivery conveyor 51d and the drive portion 748 of the second transfer portion 722 to cause the article P4 to be transferred onto the other belt 742. At this time, the article P4 is disposed closer to the delivery conveyor 51d of the sorter 5 than the center of the belt 742 in the X-axis direction. Thus, the two articles P3 and P4 are placed on the other belt 742, with the center of the belt 742 in the X-axis direction interposed therebetween. In this manner, the processor 11 places, for example, the two articles P3 and P4 in the designated positions of the belt 742 of the second transfer portion 722 (step ST3).

Upon presenting an output indicating that a predetermined number (four in this case) of articles are appropriately placed on the second transfer portion 722 (step ST4-Yes), the processor 11 performs the next process (step ST5).

Herein, the four articles P1 to P4 are placed on the second transfer portion 722 in a horizontal state and spaced apart from each other.

When, for example, four articles are loaded on the second transfer portion 722 on the conveying apparatus 7, the processor 11 transmits, to the control apparatus 30 for the conveying apparatus 7 through the communication portion 15, a control signal for transferring the articles P1 to P4, for example, one by one to the sorting destinations.

The processor 11 obtains the "sorting destination" corresponding to the obtained ID by referring to the sorting destination information. Upon obtaining the "sorting destination," the processor 11 specifies the sorting destination tray corresponding to the "sorting destination." That is, the processor 11 specifies the sorting destination trays to which the respective articles P1 to P4 are transferred. The processor 11 then calculates an optimal path for transferring the articles, for example, one by one to the four sorting destination trays specified based on the IDs of the four articles P1 to P4 placed on the second transfer portion 722, and causes the conveying apparatus 7 to move. That is, the processor 11 specifies the sorting destination trays based on the IDs of the four articles P1 to P4 placed on the second transfer portion 722, calculates the optimal path for transferring the articles, for example, one by one to the sorting destination trays, and causes the conveying apparatus 7 to move (step ST5).

The processor 11 that controls the processor 31 of the control apparatus 30 for the conveying apparatus 7 controls the drive portion 76 of the automated guided vehicle portion 701 according to the control signal, and causes the second transfer portion 722 of the conveying apparatus 7 to move to the front of the transferring position of the selected sorting destination tray of the shelf portion 4. The front of the transferring position herein refers to a position where the second transfer portion 722 faces the front of the sorting destination. Herein, the four articles P1 to P4 are sequentially sorted into the positions indicated by reference numerals 8005, 7005, 6006, and 5006 as the sorting destinations, as described above. Thus, the processor 11 that controls the processor 31 of the control apparatus 30 for the conveying apparatus 7 arranges, according to the control signal, the second transfer portion 722 of the conveying apparatus 7a in the positions indicated by reference numerals 8005, 7005, 6006, and 5006 in the direction in which the articles are taken in and out. The processor 11 controls the drive portion 750a of the rotation mechanism 750, as necessary, to direct the discharge end 722a of the second transfer portion 722 to the reference numerals 8005, 7005, 6006, and 5006. Herein, the conveying direction of the belts 742 and 744 is changed from the X-axis direction to the Y-axis direction.

The processor 11 that controls the processor 31 of the control apparatus 30 for the conveying apparatus 7 controls the drive portion 703a of the moving mechanism 703 to cause the second transfer portion 722 to move up and down along the pair of supporting columns 711a of the framework 711 in order to arrange the articles P1 to P4 desired to be transferred to the sorting destinations indicated by reference numerals 8005, 7005, 6006, and 5006 above the lower end of the tray opening of the sorting destinations, in accordance with the control signal.

Herein, for example, the article sorting system 100 according to the present embodiment can transfer the four articles P1 to P4 one by one in the order of the sorting destination tray in the eighth stage, the sorting destination tray in the seventh stage, the sorting destination tray in the sixth stage, and the sorting destination tray in the fifth stage.

First, the processor 11, for example, causes the article P1 shown in FIG. 15 to be transferred to the sorting destination tray indicated by reference numeral 8005. At this time, the processor 11 drives the drive portion 703a of the moving mechanism 703 to make the discharge end 722a of the belt 744 of the second transfer portion 722 adjacent to the sorting destination tray 8005, as shown in FIG. 9 (step ST6). The processor 11 also controls the drive portion 76 of the automated guided vehicle portion 701 as necessary. At this time, the height of the discharge end 722a of the belt 744 of the second transfer portion 722 is set to a position equal to or slightly higher than the height of the opening of the sorting destination tray 8005. The distance between the discharge end 722a of the belt 744 of the second transfer portion 722 and the opening of the sorting destination tray 8005 (the distance in the direction in which the article is taken in and out of the shelf portion 4 (Y-axis direction)) is set to be smaller than the size of the article. This distance may be a distance at which the article can be reliably transferred through the opening of the sorting destination tray 8005.

The processor 11 determines whether the sorting destination tray is the same as the selected sorting destination tray 8005 or not using the sensor 760. If they are the same, the processor 11 drives the drive portion 748 of the second transfer portion 722 to cause the belt 744 to operate, thereby transferring the article P1 to the sorting destination tray 8005 (step ST7). The processor 11 outputs whether the article P1 is transferred to the selected sorting destination tray 8005 or not using the sensor 760.

If the processor 11 presents an output indicating that the sorting destination tray is different from the selected sorting destination tray 8005 using the sensor 760, the processor 11 causes the conveying apparatus 7a to move in order to search for a correct sorting destination tray.

Upon presenting an output indicating that the remaining articles P2 to P4 among the predetermined number (four in this case) of articles are not appropriately placed on the selected sorting destination trays 7005, 6006, and 5006, respectively (step ST8-No), the processor 11 drives the drive portion 703a of the moving mechanism 703 to cause the discharge end 722a of the belt 744 of the second transfer portion 722 to be adjacent to the sorting destination tray 7005 of the article P2 to be transferred next (step ST6). At this time, the height of the discharge end 722a of the belt 744 of the second transfer portion 722 is set to a position equal to or slightly higher than the height of the opening of the sorting destination tray 7005.

The processor 11 determines whether the sorting destination tray is the same as the selected sorting destination tray 7005 or not using the sensor 760. If they are the same, the processor 11 drives the drive portion 748 of the second transfer portion 722 to cause the belt 744 to operate, thereby transferring the article P2 to the sorting destination tray 7005 (step ST7).

Upon presenting an output indicating that the remaining articles P3 and P4 among the predetermined number (four in this case) of articles are not appropriately placed on the selected sorting destination trays 6006 and 5006, respectively (step ST8-No), the processor 11 drives the drive portion 703a of the moving mechanism 703 to cause the discharge end 722a of the belt 742 of the second transfer portion 722 to be adjacent to the sorting destination tray 6006 of the article P3 to be transferred next (step ST6). At this time, the height of the discharge end 722a of the belt 742 of the second transfer portion 722 is set to a position equal to or slightly higher than the height of the opening of the sorting destination tray 6006.

The processor 11 determines whether the sorting destination tray is the same as the selected sorting destination tray 6006 or not using the sensor 760. If they are the same, the processor 11 drives the drive portion 748 of the second transfer portion 722 to cause the belt 742 to operate, thereby transferring the article P3 to the sorting destination tray 6006 (step ST7).

Upon presenting an output indicating that the remaining article P4 among the predetermined number (four in this case) of articles is not appropriately placed on the selected sorting destination tray 5006 (step ST8-No), the processor 11 drives the drive portion 703a of the moving mechanism 703 to cause the discharge end 722a of the belt 742 of the second transfer portion 722 to be adjacent to the sorting destination tray 5006 of the article P4 to be transferred next (step ST6). At this time, the height of the discharge end 722a of the belt 742 of the second transfer portion 722 is set to a position equal to or slightly higher than the height of the opening of the sorting destination tray 5006.

The processor 11 determines whether the sorting destination tray is the same as the selected sorting destination tray 5006 or not using the sensor 760. If they are the same, the processor 11 drives the drive portion 748 of the second transfer portion 722 to cause the belt 742 to operate, thereby transferring the article P4 to the sorting destination tray 5006 (step ST7).

Upon presenting an output indicating that a predetermined number (four in this case) of articles P1 to P4 are appropriately placed on the selected sorting destination trays 8005, 7005, 6006, and 5006, respectively (step ST8-Yes), the processor 11 controls the automated guided vehicle portion 701 of the conveying apparatus 7a to cause the conveying apparatus 7a to move toward the sorter 5 of the input portion 1 (step ST9). At this time, the processor 11 drives the drive portion 703a of the moving mechanism 703 of the second transfer portion 722 to cause the second transfer portion 722 to descend, and drives the drive portion 750a of the rotation mechanism 750 to direct the conveying direction of the belts 742 and 744 to the X-axis direction.

The processor 11 then obtains the sorting destination information from the host apparatus 6 again, and sorts the articles put in the input portion 1 into the selected sorting destination trays one by one.

Herein, an example in which the processor 11 causes the articles to be sorted into the sorting destinations while the second transfer portion 722 of the conveying apparatus 7a is being moved from the top to the bottom is described. The sorting destinations may be determined such that the second transfer portion 722 of the conveying apparatus 7a is moved, for example, from the top to the bottom and the conveying apparatus 7 is moved in the longitudinal direction (X-axis direction) of the respective shelf boards 4a to 4h. In this case, the processor 11 causes the conveying apparatus 7a to move with respect to the floor surface, and causes the second transfer portion 722 to move up and down via the moving mechanism 703 to sort the articles into the selected sorting destinations.

Herein, an example in which the article sorting system 100 transfers the four articles P1 to P4 one by one in the order of the sorting destination tray in the eighth stage, the sorting destination tray in the seventh stage, the sorting destination tray in the sixth stage, and the sorting destination tray in the fifth stage is described. Conversely, the article sorting system 100 may transfer the four articles P1 to P4 one by one in the order of the sorting destination tray in the fifth stage, the sorting destination tray in the sixth stage, the sorting destination tray in the seventh stage, and the sorting destination tray in the eighth stage.

In the sorter 5 and the first transfer portion 721 and the second transfer portion 722 of the conveying apparatus 7 of the article sorting system 100 according to the present embodiment, articles are placed on, for example, belt conveyors and conveyed. Thus, the sorter 5 and the first transfer portion 721 and the second transfer portion 722 of the conveying apparatus 7 of the article sorting system 100 according to the present embodiment can process a plurality of articles having a regular shape such as rectangular parallelepiped cardboard boxes, can process a plurality of articles having an irregular shape such as so-called china packets, and can also process a plurality of articles including those having a regular shape and those having an irregular shape one by one.

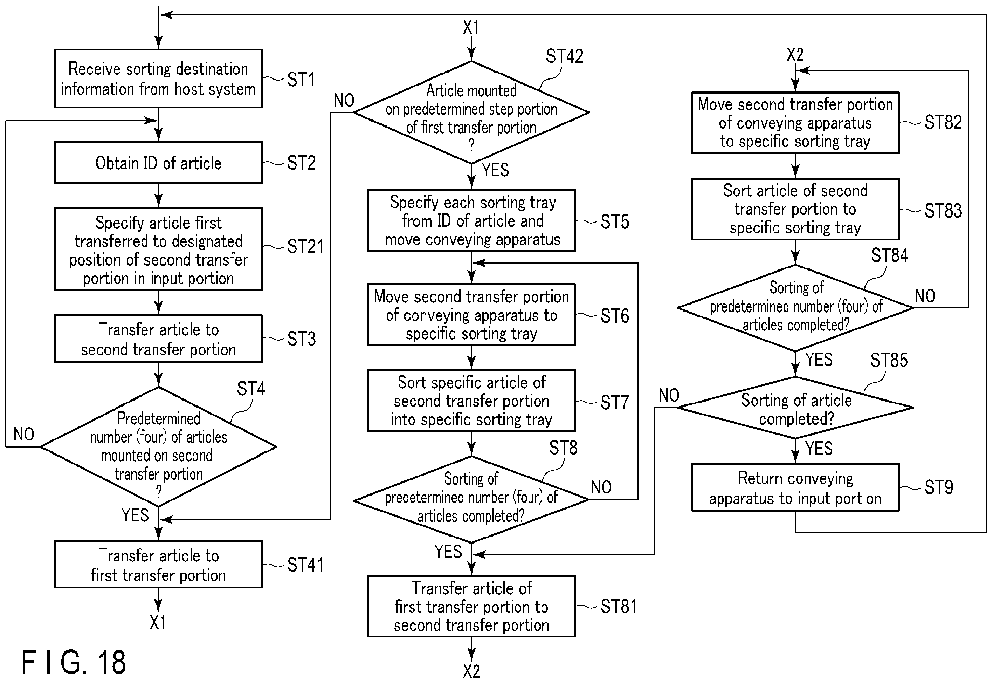

Next, an example in which articles are placed on the second transfer portion 722 of the conveying apparatus 7 from the sorter 5 via the step portions 721a to 721f of the conveying apparatus 7, and articles are transferred from the second transfer portion 722 to the sorting destinations of the shelf portion 4, will be described with reference to the flowchart shown in FIG. 18. At this time, the first transfer portion 721 of the conveying apparatus 7 is adjacent to the delivery conveyors 51a to 51f of the sorter 5. That is, one of the conveying apparatuses 7 is made to stand by in a state where the first transfer portion 721 of the conveying apparatus 7 faces the sorter 5 and the second transfer portion 722 is spaced apart from the sorter 5. At this time, the input port 2 of the sorter 5, the elevator 50, the delivery conveyors 51a to 51f, the first transfer portion 721, and the second transfer portion 722 are arranged along the X-axis direction. In addition, the delivery conveyors 51a to 51f are configured to have two belts arranged in the Y-axis direction and to place articles separately on the belts 742 and 744 of the second transfer portion 722.

Descriptions that are the same as those provided above will be omitted, as appropriate.

First, the processor 11 receives the sorting destination information from the host apparatus 6 through the communication portion 15 (step ST1).

The processor 11 reads the ID of an article put in the input portion 1 by using a scanner 3 such as a bar code reader (step ST2).

The processor 11 specifies, in the input portion 1, the article to be transferred to the designated position of the second transfer portion 722 based on the read ID of the article (step ST21). At this time, the processor 11 specifies, for example, four articles to be transferred to the second transfer portion 722 in advance before causing the conveying apparatus 7 to move toward the shelf portion 4. The processor 11 may specify the articles to be transferred to the designated position of the second transfer portion 722 after placing the articles on the six delivery conveyors 51a to 51f of the sorter 5.

For example, the processor 11 transmits a control signal for driving the delivery conveyors 51a to 51f corresponding to the step portions 721a to 721f of the first transfer portion 721 to the sorter control apparatus 20 and the control apparatus 30 for the conveying apparatus 7 through the communication portion 15.

The processor 11 transmits a control signal for delivering the articles on the delivery conveyors 51a to 51f of the sorter 5 to the step portions 721a to 721f having the same height to the sorter control apparatus 20 and the control apparatus 30 for the conveying apparatus 7 through the communication portion 15.

The processor 11 that controls the processor 21 of the sorter control apparatus 20 inputs the article placed on one of the delivery conveyors 51a to 51f to one of the step portions 721a to 721f having approximately the same height according to the control signal. The processor 11 that controls the processor 31 of the control apparatus 30 for the conveying apparatus 7 drives the drive portion 730a of the step portion having the same height among the step portions 721a to 721f such that the article placed on one of the delivery conveyors 51a to 51f is received at that step portion according to the control signal. For example, the processor 11 that controls the processor 21 inputs the articles on the delivery conveyors 51a to 51f into the step portions 721a to 721f at the timing when the articles on the delivery conveyors 51a to 51f reach the step portions 721a to 721f. The articles are placed on one of the step portions 721a to 721f, that is, loaded on the first transfer portion 721 on the conveying apparatus 7.

The processor 11 then places the articles in the designated position of the second transfer portion 722 (step ST3). Herein, the processor 11 sequentially transfers four articles from any one of the delivery conveyors 51a to 51f to the second transfer portion 722 via the step portions of the first transfer portion 721 having approximately the same height.

Upon presenting an output indicating that a predetermined number (four in this case) of articles are appropriately placed on the second transfer portion 722 (Step ST4-Yes), the processor 11 transfers the articles from one or more of the remaining delivery conveyors 51a to 51f of the sorter 5 to the first transfer portion 721 (Step ST41).

Upon presenting an output indicating that one article is placed on one of the step portions 721a to 721f of the first transfer portion 721 and no article is placed on the remaining step portions on which articles are to be placed among the step portions 721a to 721f of the first transfer portion 721 (step ST42-No), the processor 11 transfers articles from the remaining delivery conveyor 51 to the first transfer portion 721 (step ST41).

In this manner, the processor 11 sequentially transfers the articles from the sorter 5 to the first transfer portion 721. Thus, for example, four articles are placed on the second transfer portion 722, and two articles are placed on the first transfer portion 721. For example, one article may be placed on the step portion 7210 of the first transfer portion 721 in tandem with one article being placed on the second transfer portion 722. Thus, the conveying apparatus 7 can place ten articles in total, four articles on the second transfer portion 722 and six articles on the first transfer portion 721.

Upon presenting an output indicating that a predetermined number (four in this case) of articles are appropriately placed on the second transfer portion 722 and that six articles are placed on the first transfer portion 721, the processor 11 performs the next process (step ST5).

The processor 11 obtains the "sorting destination" corresponding to the obtained ID by referring to the sorting destination information. Upon obtaining the "sorting destination," the processor 11 specifies the sorting destination tray corresponding to the "sorting destination." That is, the processor 11 specifies the sorting destination trays to which the respective articles are transferred. The processor 11 then calculates an optimal path for transferring the articles to the four sorting destination trays specified based on the IDs of the four articles placed on the second transfer portion 722, and causes the conveying apparatus 7 to move. That is, the processor 11 specifies the sorting destination trays based on the IDs of the four articles placed on the second transfer portion 722, calculates the optimal path for transferring the articles to the sorting destination trays, and causes the conveying apparatus 7 to move (step ST5).

The processor 11 then causes the conveying apparatus 7 to move to a position facing the sorting destination tray of one of the four articles P1 to P4 of the shelf portion 4. Also, herein, the four articles P1 to P4 are sequentially sorted into the positions indicated by reference numerals 8005, 7005, 6006, and 5006 as the sorting destinations, as described above.

First, the processor 11, for example, causes the article P1 shown in FIG. 15 to be transferred to the sorting destination tray indicated by reference numeral 8005. At this time, the processor 11 drives the moving mechanism 703 to make the discharge end 722a of the belt 744 of the second transfer portion 722 adjacent to the sorting destination tray 8005 (step ST6). At this time, the height of the discharge end 722a of the belt 744 of the second transfer portion 722 is set to a position equal to or slightly higher than the height of the opening of the sorting destination tray 8005.

The processor 11 determines whether the sorting destination tray is the same as the selected sorting destination tray 8005 or not using the sensor 760. If they are the same, the processor 11 drives the drive portion 748 of the second transfer portion 722 to cause the belt 744 to operate, thereby transferring the article P1 to the sorting destination tray 8005 (step ST7).

Upon presenting an output indicating that the remaining articles P2 to P4 among a predetermined number (four in this case) of articles are not appropriately placed on the selected sorting destination trays (step ST8-No), the processor 11 drives the drive portion 703a of the moving mechanism 703 to cause the discharge end 722a of the belt 744 of the second transfer portion 722 to be adjacent to the sorting destination tray 7005 of the article P2 to be transferred next (step ST6).

Repeating the operations of steps ST6 and ST7, the processor 11 places a predetermined number (four in this case) of articles P1 to P4 on the selected sorting destination trays (Step ST8-Yes).

Thereafter, for example, four of the articles on the step portions 721a to 721f of the first transfer portion 721 are transferred to the second transfer portion 722 (step ST81). At this time, the processor 11 selects articles so that the path for transferring the articles from the conveying apparatus 7 to the sorting destination tray selected for each article is the shortest from the current position. Then, for example, four articles are placed on the second transfer portion 722, and two articles remain on two of the step portions 721a to 721f of the first transfer portion 721, respectively.

At this time, the processor 11 operates as described with regard to steps ST6 to ST8 above. The processor 11 causes the second transfer portion 722 of the conveying apparatus 7 to move to a specific sorting destination tray (step ST82). Thereafter, the processor 11 sorts the article on the second transfer portion 722 into the specific sorting destination tray (step ST83). The processor 11 then outputs whether or not a predetermined number (four in this case) of articles are appropriately placed one by one on the selected sorting destination trays (step ST84).

If the four articles are appropriately placed on the selected sorting destination trays (step ST84-Yes), the processor 11 outputs whether or not the sorting of the articles placed on the conveying apparatus 7 is completed (step ST85). If the sorting of the articles is not completed (step ST85-No), that is, if, for example, an article(s) remain(s) on the remaining step portion(s) among the step portions 721a to 721f of the first transfer portion 721, the processor 11 causes the conveying apparatus 7 to perform the processes of steps ST81 to ST84 again. If the sorting of the articles placed on the conveying apparatus 7 is completed (step ST85-Yes), the processor 11 controls the automated guided vehicle portion 701 of the conveying apparatus 7 to cause the conveying apparatus 7 to move toward the sorter 5 of the input portion 1 (step ST9).

The processor 11 then repeats the process of obtaining the sorting destination information from the host apparatus 6 again and sorting the articles put in the input portion 1 into the selected sorting destination trays one by one.

In this manner, the processor 11 controls the moving mechanism 703 to cause the second transfer portion 722 to move to a position where articles can be transferred from the step portion 7210 selected from the plurality of step portions of the first transfer portion 721 to the second transfer portion 722, and controls the first transferring mechanism 730 of the first transfer portion 721 to cause the articles to be transferred from the step portion 7210 selected from the plurality of step portions of the first transfer portion 721 to the second transfer portion 722. The processor 11 then controls the moving mechanism 703 to cause the second transfer portion 722 to move in the vertical direction according to the height of the sorting destinations of the articles, and controls the second transferring mechanism 740 of the second transfer portion 722 to cause the articles to be transferred one by one to the sorting destinations selected from the plurality of sorting destinations of the shelf portion 4.

Therefore, in the article sorting method using the article sorting system 100 according to the present embodiment, information on a plurality of articles to be sorted into the sorting destinations of the shelf portion 4 is obtained first. A plurality of articles are placed together on the article transfer portion 702 of the conveying apparatus 7. The respective sorting destinations of the shelf portion 4 corresponding to the respective articles are selected according to the information on the respective articles placed on the article transfer portion 702. The automated guided vehicle portion 701, the article transfer portion 702, and the moving mechanism 703 of the conveying apparatus 7 are operated to transfer the plurality of articles placed on the article transfer portion 702 to the corresponding sorting destinations.

By using the article sorting method that uses the article sorting system 100 described above, articles can be sorted into, for example, the sorting destinations selected by the host apparatus 6 with or without the respective articles put in containers such as folding containers. A container containing one or more articles may be processed as one article in the article sorting system 100.

Placing a plurality of articles together on the article transfer portion 702 includes placing one or both of regularly shaped articles and irregularly shaped articles (i.e., regularly shaped articles and/or irregularly shaped articles) on the article transfer portion 702 at the same time.

Placing a plurality of articles together on the article transfer portion 702 also includes placing, on one side (i.e., on the second transfer portion 722), one or more articles to be sequentially sorted into the sorting destinations first among the plurality of articles, and stocking, on the other side (i.e., on the first transfer portion 721), the remaining articles among the plurality of articles. Then, placing a plurality of articles together on the article transfer portion 702 includes, after the articles on one side are sequentially sorted into the sorting destinations and there are no more articles one side, moving one or more articles on the other side to one side and sequentially sorting the articles into the sorting destinations corresponding to the respective articles.

The position of the upper end of the framework 711 of the conveying apparatus 7 according to the present embodiment may be any position as long as it is lower than the height of the ceiling of a building. The uppermost movement position of the second transfer portion 722 may be any position as long as it is lower than the height of the ceiling of a building and is not in contact with the ceiling. Thus, the conveying apparatus 7 according to the present embodiment can efficiently use the space between the floor surface and the ceiling of a building.

The position of the upper end of the shelf portion 4 according to the present embodiment may be any position as long as it is lower than the height of the ceiling of a building. If the shelf portion 4 is fixed to the floor surface, the shelf portion 4 may be fixed to the ceiling of a building. Thus, the shelf portion 4 according to the present embodiment can efficiently use the space between the floor surface and the ceiling of a building. Accordingly, the article sorting system 100 can add sorting destinations sequentially toward the upper side, and can define more sorting destinations and/or sorting destinations of various sizes in the shelf portion 4. Specifically, the shelf boards can be arranged between the floor surface and the ceiling on the upper side to set more sorting destinations. The shelf portion 4 is preferably movable.

Thus, the conveying apparatus 7 can sort articles into higher sorting destinations by, for example, forming the second transfer portion 722 so as to make the second transfer portion 722 move closer to the ceiling along the pair of supporting columns 711a of the framework 711. Accordingly, in cooperation with the shelf portion 4, the maximum movement height of the second transfer portion 722 of the conveying apparatus 7 can be increased, and the articles can be sorted into more sorting destinations. Furthermore, a greater variety of articles can be sorted into the selected sorting destinations.

In this manner, the sorting destinations of the shelf portion 4 according to the present embodiment can be defined on the further upper side of the space up to the ceiling, and the movable region of the second transfer portion 722 of the conveying apparatus 7 can be set on the upper side of the space from the vicinity of the floor surface to the ceiling according to the definition of the sorting destinations of the shelf portion 4. That is, the processing capability of the article sorting can be improved by extending the movable region of the second transfer portion 722 of the conveying apparatus 7 to the further upper side.

The article sorting system 100 according to the present embodiment can add sorting destination trays sequentially toward the upper side according to the height (space) between the floor surface and the ceiling of a building, and can use these sorting destination trays. Thus, if the second transfer portion 722 of the conveying apparatus 7 is prepared according to the space between the floor surface and the ceiling of a building, the article sorting system 100 according to the present embodiment can, for example, increase the number of sorting destinations as the ceiling of the building becomes higher, and there is no limitation on the increase in the number of sorting destinations. That is, the processing capability of the article sorting can be improved by defining the sorting destinations of the shelf portion 4 so as to stack the sorting destinations toward the further upper side and raising the movable height of the second transfer portion 722 to the ceiling side according to the definition.

Therefore, the shelf portion 4 according to the present embodiment can add the sorting destinations of the articles on the upper side, form the conveying apparatus 7 corresponding thereto, and improve the processing capability of the article sorting in a small area of the plane.

For example, by increasing or decreasing the number of input portions 1 and conveying apparatuses 7 according to an increase or decrease in the number of sorting destinations, the article sorting system 100 according to the present embodiment can suppress the congestion of the conveying apparatuses 7 to increase or decrease the sorting speed and efficiently sort the articles. For example, if the number of conveying apparatuses 7 is increased, the article sorting system 100 according to the present embodiment can increase the processing capability of the article sorting per unit time.

In addition, the article sorting system 100 according to the present embodiment can install sorting destinations using an inexpensive medium, such as installing box-shaped sorting destination trays in the shelf portion 4. Thus, the article sorting system 100 according to the present embodiment can suppress an increase in cost even if the sorting destinations are added.

Therefore, according to the present embodiment, it is possible to provide the article sorting system 100 that can easily increase the number of sorting destinations and easily improve the processing capability, and provide the article sorting method using such an article sorting system 100. The article sorting system 100 according to the present embodiment has no limitation on an increase in the processing capability of the article sorting process.

### (Second Embodiment)

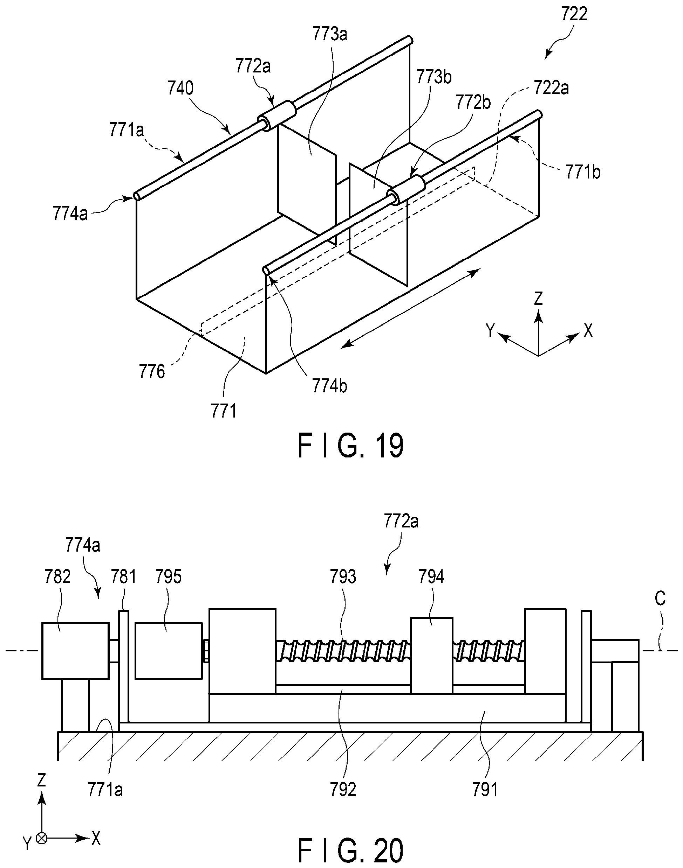

Next, an article sorting system 100 according to a second embodiment will be described with reference to FIGS. 19 to 23. The present embodiment is a modification of the first embodiment, and the same members as those described in the first embodiment or members having the same functions as those described in the first embodiment are denoted by the same symbols to the extent possible, and detailed description thereof will be omitted.

In the present embodiment, a modification of the structure of the second transfer portion 722 will be described.

As shown in FIG. 19, the second transfer portion 722 includes a placement portion 771 on which an article is placed, a pair of shafts (ball screw portions) 772a and 772b, a pair of paddles 773a and 773b, and a pair of rotation mechanisms 774a and 774b that rotate the shafts 772a and 772b, respectively.

The placement portion 771 has a bottom surface that is, for example, a plane, and is formed in a substantially half-pipe shape on which an article is placed. The placement portion 771 has a pair of upper end portions 771a and 771b.

The rotation mechanism 774a is provided on the upper end portion 771a of the placement portion 771, and the rotation mechanism 774b is provided on the upper end portion 771b. The shaft 772a is supported by the rotation mechanism 774a, and the shaft 772b is supported by the rotation mechanism 774b.

The pair of shafts 772a and 772b are arranged along a direction in which articles are moved, and are spaced apart from each other by a distance larger than the width of articles in the width direction that intersects the direction in which articles are moved.

As shown in FIG. 20, the rotation mechanism 774a includes a support portion 781 on which the shaft 772a is disposed and which supports the shaft 772a on an extension line of the rotation axis C of the shaft 772a, and one or more rotation drive portions 782 which rotate the support portion 781 with respect to the upper end portion 771a of the placement portion 771.

The shaft 772a includes a base 791, a guide rail 792, a screw shaft 793, a nut 794, and one or more drive portions 795. The base 791, the guide rail 792, and the screw shaft 793 extend along the longitudinal direction of the placement portion 771. One end and the other end of the screw shaft 793 are supported by the base 791. The screw shaft 793 is connected to the drive portion 795. Thus, when the screw shaft 793 is rotated by the drive portion 795, the nut 794 moves along the guide rail 792 along the axial direction of the screw shaft 793. Accordingly, the shaft 772a functions similarly to a ball screw mechanism. A gear may be disposed between the drive portion 795 and the screw shaft 793.

The paddle 773a is fixed to the nut 794. Thus, the paddle 773a is movable along the axial direction of the screw shaft 793 in tandem with the movement of the nut 794.

The base 791 can be brought into contact with and spaced apart from the upper end portion 771a of the placement portion 771 by the operation of the rotation mechanism 774a.

When the rotation drive portion 782 of the rotation mechanism 774a is operated, the entire shaft 772a rotates together with the support portion 781 with respect to the upper end portion 771a of the placement portion 771.

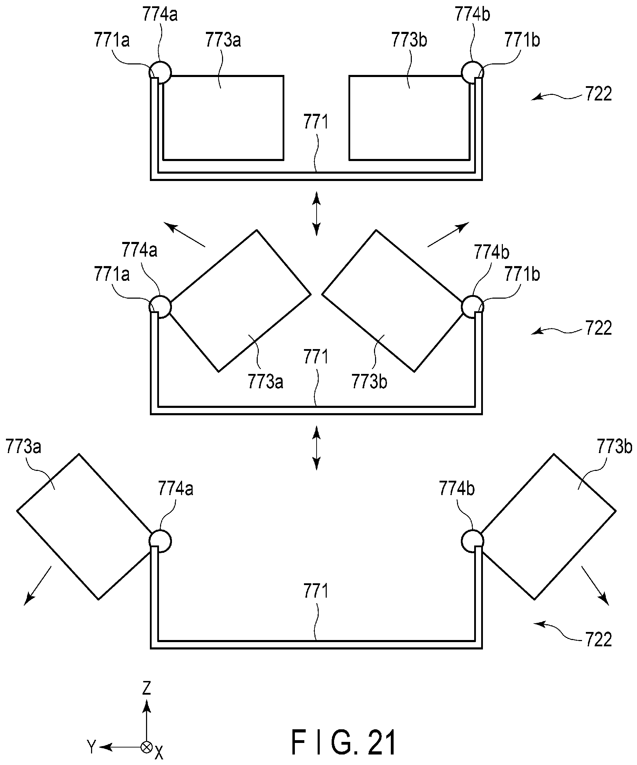

Thus, as shown in FIG. 21, the paddle 773a is movable between a position where the paddle 773a is placed within the placement portion 771 and a position where the paddle 773a is retracted to the outside of the placement portion 771.

Accordingly, the paddle 773a is supported by the shaft 772a, moves along the shaft 772a, rotates about the axis of the shaft 772a, and moves to a position where the paddle 773a is brought into contact with articles and transfers the articles, for example, one by one to the sorting destinations and a position where the paddle 773a is retracted from the contact with the articles.

Although not explained, the shaft 772b is formed in the same manner as the shaft 772a, and the rotation mechanism 774b is formed in the same manner as the rotation mechanism 774a.

Therefore, the paddle 773b is supported by the shaft 772b, moves along the shaft 772b, rotates about the axis of the shaft 772b, and moves to a position where the paddle 773b is brought into contact with articles and transfers the articles, for example, one by one to the sorting destinations and a position where the paddle 773b is retracted from the contact with the articles.

The drive portions 782 and 795 are, for example, controlled by the processor 11 (see FIG. 11) via the processor 71 (see FIG. 14).

Therefore, when the processor 11 controls the drive portion 782, the paddles 773a and 773b rotate between the inside of the placement portion 771 and the outside of the placement portion 771, as shown in FIG. 21. Also, when the processor 11 controls the drive portion 795, the paddles 773a and 773b move along the longitudinal direction of the placement portion 771, as shown in FIGS. 19, 22, and 23.

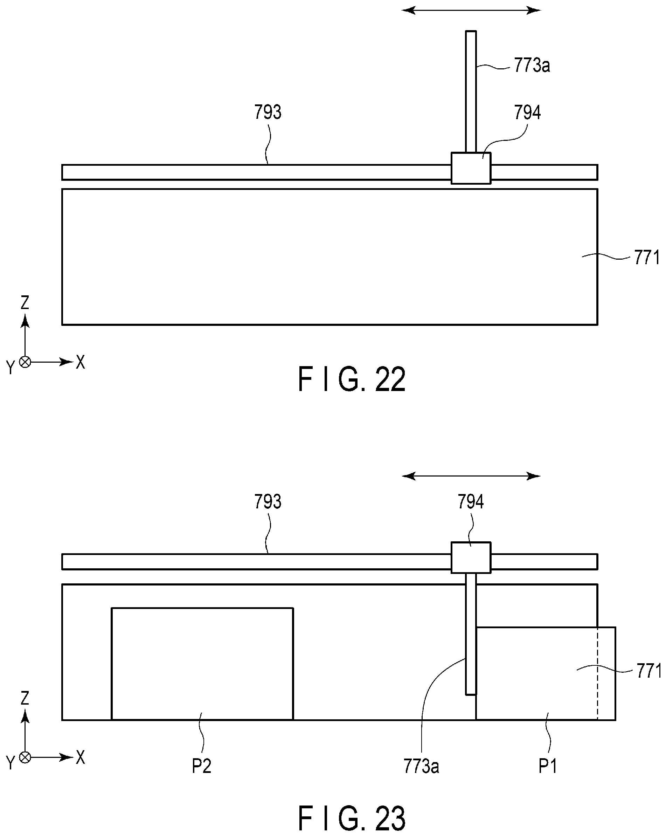

When the processor 11 controls the drive portions 782 and 795, the paddles 773a and 773b can be rotated between the inside of the placement portion 771 and the outside of the placement portion 771 while being moved along the longitudinal direction of the placement portion 771, as shown in FIGS. 22 and 23.

For example, when one article is delivered from the first transfer portion 721 to the second transfer portion 722 of the conveying apparatus 7, the paddles 773a and 773b are retracted to the outside of the placement portion 771 of the second transfer portion 722. In addition, the paddles 773a and 773b are arranged closest to the first transfer portion 721 side of the placement portion 771. After the articles are placed on the placement portion 771 of the second transfer portion 722 from the first transfer portion 721, the paddles 773a and 773b are put inside the placement portion 771 of the second transfer portion 722. By moving the positions of the paddles 773a and 773b in the longitudinal direction of the placement portion 771, the articles can be moved from the first transfer portion 721 side to the discharge end 722a side of the second transfer portion 722.

As shown in FIG. 22, the articles are transferred from the first transfer portion 721 to the second transfer portion 722 in a state where the pair of paddles 773a and 773b are retracted with respect to the placement portion 771. At this time, by arranging the pair of paddles 773a and 773b between the two articles P1 and P2 and pressing the article P1 on the discharge end 722a side toward the discharge end 722a side using the pair of paddles 773a and 773b, the articles P1 and P2 can be arranged in such a manner as to be spaced apart from each other along the longitudinal direction of the placement portion 771, as shown in FIG. 23. Thus, at least two articles are sorted by arranging the pair of paddles 773a and 773b between the articles P1 and P2.

In the case where the articles are sorted into the selected sorting destination trays from the second transfer portion 722, the articles are pushed out of the placement portion 771 by the pair of paddles 773a and 773b and put into the sorting destination trays.

The position adjustment of the articles on the placement portion 771 can be performed by combining the movement of the paddles 773a and 773b in the axial direction and the insertion and removal of the paddles 773a and 773b into and from the placement portion 771.

The paddles 773a and 773b may be controlled one by one or controlled simultaneously. The paddles 773a and 773b may have the same size or different sizes. It is preferable that the paddles 773a and 773b do not come into contact with each other during movement in a direction along the shafts 772a and 772b and during rotation about the axis of the shafts 772a and 772b. If the paddles 773a and 773b are formed so as to come into contact with each other during rotation about the axis of the shafts 772a and 772b, for example, the paddles 773a and 773b may be fixed in such a manner as to be shifted from each other by about several millimeters to about several centimeters along the axial directions of the shafts 772a and 772b, for example, or are preferably shifted from each other during operation, so that the paddles 773a and 773b are prevented from coming into contact with each other.

The second transfer portion 722 according to the present embodiment can sort two articles placed on the placement portion 771 at the same time along the article delivering direction, for example, as in one of the belts 742 and 744 described in the first embodiment.

In addition, the second transfer portion 722 may be provided with a partition wall 776 placed or fixed on the bottom surface of the placement portion 771 along the article delivering direction of the placement portion 771, as indicated by the broken line in FIG. 19. The partition wall 776 is disposed between the paddles 773a and 773b. The partition wall 776 is formed to have a height that does not hinder the rotation of the paddles 773a and 773b if the placement portion 771 can be partitioned in the Y-axis direction shown in FIG. 19. In this case, a maximum of four articles can be placed on the placement portion 771 and the articles can be sorted into the sorting destinations one by one, as described in the first embodiment.

Here, the four articles P1 to P4 are placed on the placement portion 771 of the second transfer portion 722 in a horizontal state and spaced apart from each other.

The conveying apparatus 7 according to the present embodiment can use the second transfer portion 722 according to the second embodiment operating in this manner in combination with the first transfer portion 721 described in the first embodiment. The processor 11 delivers articles, for example, one by one to the placement portion 771 of the second transfer portion 722 from each of the step portions 7210 of the first transfer portion 721. The processor 11 then appropriately operates the paddles 773a and 773b of the second transfer portion 722 to cause the articles to be placed, for example, one by one on the sorting destinations from the second transfer portion 722.

In this case as well, the processor 11 causes the second transfer portion 722 to place a maximum of four articles on the placement portion 771 and sort the articles into the selected sorting destinations.

As described in the first embodiment, the first transfer portion 721 may not be used or may not be present. In this case, the processor 11 causes the second transfer portion 722 to place a maximum of four articles directly from the sorter 5 onto the placement portion 771 and sort the articles into the selected sorting destinations.

By using the paddles 773a and 773b, the shape of the articles is not limited to a regular shape such as a cardboard box, and an irregularly shaped object such as a so-called china packet can be processed. Therefore, versatility can be enhanced when the articles are sorted.

In the present embodiment, an example in which each of the pair of shafts 772a and 772b includes the drive portion 795 is described. For example, the nuts 794 of the pair of shafts 772a and 772b can be simultaneously or selectively operated along the longitudinal direction of the shafts 772a and 772b by one drive portion 795 using a gear or the like.

Also, in the present embodiment, an example in which each of the pair of rotation mechanisms 774a and 774b includes the rotation drive portion 782 is described. For example, the shaft 772a supported by the rotation mechanism 774a and the shaft 772b supported by the rotation mechanism 774b can be simultaneously or selectively rotated about the axis of the shafts in the longitudinal direction by one rotation drive portion 782 using a gear or the like.

Therefore, the processor 11 controls the moving mechanism 703 to cause the second transfer portion 722 to move to a position where articles can be transferred from the step portion 7210 selected from the plurality of step portions of the first transfer portion 721 to the second transfer portion 722, and controls the first transferring mechanism 730 of the first transfer portion 721 to cause the articles to be transferred from the step portion 7210 selected from the plurality of step portions of the first transfer portion 721 to the second transfer portion 722. The processor 11 controls the moving mechanism 703 to cause the second transfer portion 722 to move in the vertical direction according to the height of the sorting destinations of the articles, and controls the drive portions 782 and 795 to cause the paddles 773a and 773b of the second transfer portion 722 to move and transfer the articles, for example, one by one to the sorting destinations selected from the plurality of sorting destinations of the shelf portion 4.

The sorting destinations of the shelf portion 4 according to the present embodiment can be defined on the further upper side of the space up to the ceiling, and the movable region of the second transfer portion 722 of the conveying apparatus 7 can be set on the upper side of the space from the vicinity of the floor surface to the ceiling according to the definition of the sorting destinations of the shelf portion 4. That is, when the processor 11 causes the paddles 773a and 773b of the second transfer portion 722 of the conveying apparatus 7 to rotate, the second transfer portion 722 can be moved upward to a position where the paddles 773a and 773b do not come into contact with the ceiling.

The article sorting system 100 according to the present embodiment can add sorting destination trays sequentially toward the upper side according to the height (space) between the floor surface and the ceiling of a building, and can use these sorting destination trays. Thus, if the first transfer portion 721 and the second transfer portion 722 of the conveying apparatus 7 are prepared according to the space between the floor surface and the ceiling of a building, the article sorting system 100 according to the present embodiment can, for example, increase the number of sorting destinations as the ceiling of the building becomes higher, and there is no limitation on the increase in the number of sorting destinations. That is, the processing capability of the article sorting can be improved by defining the sorting destinations of the shelf portion 4 so as to stack the sorting destinations toward the further upper side and raising the movable height of the second transfer portion 722 to the ceiling side according to the definition.

Therefore, the shelf portion 4 according to the present embodiment can add the sorting destinations of the articles on the upper side, form the conveying apparatus 7 corresponding thereto, and improve the processing capability of the article sorting with a small area of the plane.

For example, by increasing or decreasing the number of input portions 1 and conveying apparatuses 7 according to an increase or decrease in the number of sorting destinations, the article sorting system 100 according to the present embodiment can suppress the congestion of the conveying apparatuses 7 to increase or decrease the processing capability and efficiently sort the articles. For example, if the number of conveying apparatuses 7 is increased, the article sorting system 100 according to the present embodiment can increase the processing capability of the article sorting per unit time.

In addition, the article sorting system 100 according to the present embodiment can install sorting destinations using an inexpensive medium, such as installing box-shaped sorting destination trays in the shelf portion 4. Thus, the article sorting system 100 according to the present embodiment can suppress an increase in cost even if the sorting destinations are added.

Therefore, according to the present embodiment, it is possible to provide the article sorting system 100 that can easily increase the number of sorting destinations and easily improve the processing capability, and provide the article sorting method using such an article sorting system 100. The article sorting system 100 according to the present embodiment has no limitation on an increase in the processing capability of the article sorting process.

Also, by using the pair of paddles 773a and 773b and opening the side surfaces of the sorting destination trays, the articles can be moved by sliding, and the articles can be prevented from being damaged due to falling when the articles are placed on the sorting destinations.

### (Third Embodiment)

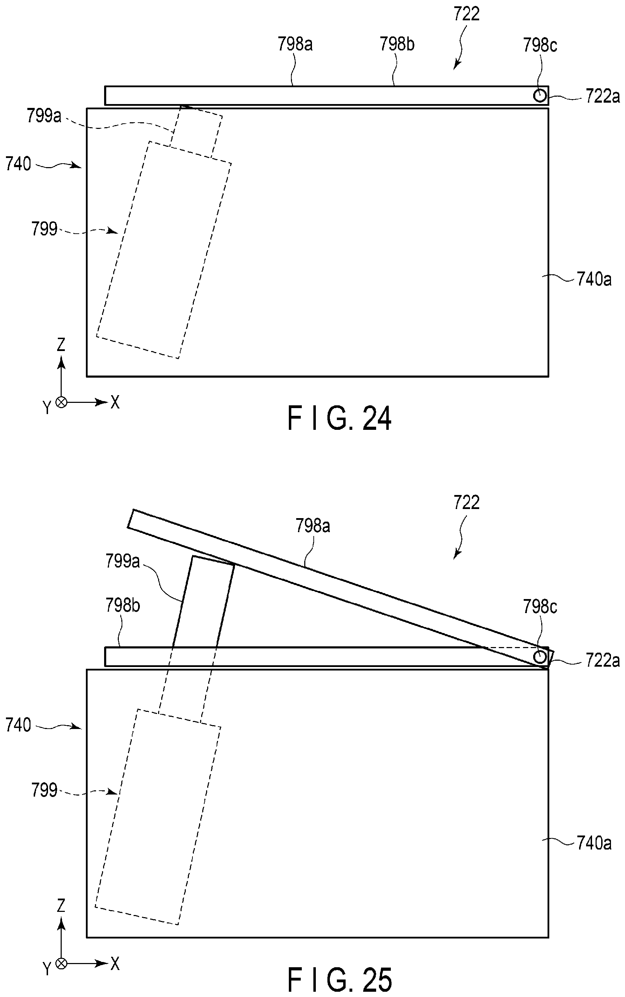

Next, an article sorting system 100 according to a third embodiment will be described with reference to FIGS. 24 and 25. The present embodiment is a modification of the first embodiment and the second embodiment, and the same members as those described in the first embodiment and the second embodiment or members having the same functions as those described in the first embodiment and the second embodiment are denoted by the same symbols to the extent possible, and detailed description thereof will be omitted.

In the present embodiment, a modification of the structure of the second transfer portion 722 will be described.

As shown in FIGS. 24 and 25, the second transfer portion 722 has a plurality of placement surfaces 798a and 798b for one article each, and an inclination mechanism 799 (only one shown).

The placement surfaces 798a and 798b are arranged side by side in the depth direction of the sheets of FIGS. 24 and 25. The placement surfaces 798a and 798b are preferably coupled to a base 740a of the second transferring mechanism 740 at the discharge end 722a by, for example, a common hinge 798c so as to be openable and closable.

Each of the inclination mechanisms 799 is accommodated in the base 740a of the second transferring mechanism 740. Each of the inclination mechanisms 799 has an expansion-contraction portion 799a which expands and contracts along the axial direction. Here, an example of rotating the placement surface 798a on the near side of the sheets of FIGS. 24 and 25 will be described.

The inclination mechanism 799 inclines the article placement surface 798a between a horizontal position (see FIG. 24) and an inclined position (see FIG. 25) through the expansion and contraction of the expansion-contraction portion 799a. Thus, the second transfer portion 722 of the conveying apparatus 7 according to the present embodiment slides articles by tilting the articles rather than conveying or pushing out the articles, and thereby transfers the articles to the sorting destinations.

The processor 11 controls the drive of the expansion-contraction portion 799a between the retracted position shown in FIG. 24 and the protruded position shown in FIG. 25.

The placement surfaces 798a and 798b of the second transfer portion 722 are arranged in the depth direction of the sheets of FIGS. 24 and 25, and articles are placed, for example, one by one on the placement surfaces 798a and 798b. In this case, the placement surfaces 798a and 798b are individually inclined by the respective inclination mechanisms 799, whereby articles can be sorted, for example, one by one into the sorting destination trays in different height positions.

For example, when two articles are delivered from the first transfer portion 721 to the second transfer portion 722 of the conveying apparatus 7, the processor 11 arranges the placement surfaces 798a and 798b of the second transfer portion 722 in horizontal positions. The processor 11 then places one article on the placement surface 798a of the second transfer portion 722 from the first transfer portion 721, and places the remaining one article on the placement surface 798b.

Here, the two articles P1 and P2 are placed on the placement surfaces 798a and 798b of the second transfer portion 722 in a horizontal state and spaced apart from each other.

Thereafter, the processor 11 causes the discharge end 722a of the placement surface 798a of the second transfer portion 722 to move to the selected sorting destination. At this time, the discharge end 722a is arranged slightly above the lower end of the opening of the sorting destination tray. In this state, the processor 11 arranges the placement surface 798a in the inclined position, whereby the articles on the placement surface 798a are transferred to the intended sorting destinations.

In addition, the discharge end 722a of the placement surface 798b of the second transfer portion 722 is moved to the sorting destination selected for the article placed on the placement surface 798b. At this time, the discharge end 722a is arranged slightly above the lower end of the opening of the sorting destination tray. In this state, the processor 11 arranges the placement surface 798b in the inclined position, whereby the articles on the placement surface 798b are transferred to the intended sorting destinations.

The conveying apparatus 7 according to the present embodiment can use the second transfer portion 722 according to the third embodiment operating in this manner in combination with the first transfer portion 721 described in the first embodiment. In this case, the four articles described in the first embodiment are not operated by the second transfer portion 722 at the same time. The processor 11 delivers articles, for example, one by one to the second transfer portion 722 from each of the step portions 721a to 721f of the first transfer portion 721. The processor 11 then appropriately operates the expansion-contraction portion 799a of the second transfer portion 722 to cause the articles to be placed, for example, one by one on the sorting destinations from the second transfer portion 722.

Therefore, the processor 11 controls the moving mechanism 703 to cause the second transfer portion 722 to move to a position where articles can be transferred from the step portion 7210 selected from the plurality of step portions of the first transfer portion 721 to the second transfer portion 722, and controls the first transferring mechanism 730 of the first transfer portion 721 to cause the articles to be transferred from the step portion 7210 selected from the plurality of step portions of the first transfer portion 721 to the second transfer portion 722. The processor 11 controls the moving mechanism 703 to cause the second transfer portion 722 to move in the vertical direction according to the height of the sorting destinations of the articles, and controls the inclination mechanism 799 to cause the placement surfaces 798a and 798b of the second transfer portion 722 to be individually inclined to transfer the articles, for example, one by one to the sorting destinations selected from the plurality of sorting destinations of the shelf portion 4.

By using the inclination mechanism 799, the shape of the articles is not limited to a regular shape such as a cardboard box, and an irregularly shaped object such as a so-called china packet can be processed. Therefore, versatility can be enhanced when the articles are sorted.

The sorting destinations of the shelf portion 4 according to the present embodiment can be defined on the further upper side of the space up to the ceiling, and the movable region of the second transfer portion 722 of the conveying apparatus 7 can be set on the upper side of the space from the vicinity of the floor surface to the ceiling according to the definition of the sorting destinations of the shelf portion 4. That is, when the processor 11 causes the placement surfaces 798a and 798b of the second transfer portion 722 of the conveying apparatus 7 to be inclined, the second transfer portion 722 can be moved upward to a position where the placement surfaces 798a and 798b do not come into contact with the ceiling.

The article sorting system 100 according to the present embodiment can add sorting destination trays sequentially toward the upper side according to the height (space) between the floor surface and the ceiling of a building, and can use these sorting destination trays. Thus, if the first transfer portion 721 and the second transfer portion 722 of the conveying apparatus 7 are prepared according to the space between the floor surface and the ceiling of a building, the article sorting system 100 according to the present embodiment can, for example, increase the number of sorting destinations as the ceiling of the building becomes higher, and there is no limitation on the increase in the number of sorting destinations. That is, the processing capability of the article sorting can be improved by defining the sorting destinations of the shelf portion 4 so as to stack the sorting destinations toward the further upper side and raising the movable height of the second transfer portion 722 to the ceiling side according to the definition.

Therefore, the shelf portion 4 according to the present embodiment can add the sorting destinations of the articles on the upper side, form the conveying apparatus 7 corresponding thereto, and improve the processing capability of the article sorting with a small area of the plane.

For example, by increasing or decreasing the number of input portions 1 and conveying apparatuses 7 according to an increase or decrease in the number of sorting destinations, it is possible to suppress the congestion of the conveying apparatuses 7 to increase or decrease the processing capability and efficiently sort the articles. For example, if the number of conveying apparatuses 7 is increased, the article sorting system 100 according to the present embodiment can increase the processing capability of the article sorting per unit time.

In addition, the article sorting system 100 according to the present embodiment can install sorting destinations using an inexpensive medium, such as installing box-shaped sorting destination trays in the shelf portion 4. Thus, the article sorting system 100 according to the present embodiment can suppress an increase in cost even if the sorting destinations are added.

Therefore, according to the present embodiment, it is possible to provide the article sorting system 100 that can easily increase the number of sorting destinations and easily improve the processing capability, and provide the article sorting method using such an article sorting system 100. The article sorting system 100 according to the present embodiment has no limitation on an increase in the processing capability of the article sorting process.

According to at least one of the embodiments described above, it is possible to provide the article sorting system 100 that can easily improve the processing capability, and provide the article sorting method using such an article sorting system 100.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An article sorting system, comprising:
an input portion;
a conveying apparatus configured to convey a plurality of articles through the input portion; and
a shelf portion that is spaced apart from the input portion, is defined by a plurality of stages at least in a height direction, and includes a plurality of sorting destinations into which the plurality of articles are sorted,
wherein:
the conveying apparatus includes:
an automated guided vehicle portion configured to move between the input portion and the plurality of sorting destinations of the shelf portion;
an article transfer portion that is provided on the automated guided vehicle portion, extends upward from the automated guided vehicle portion, and is configured to move according to a movement of the automated guided vehicle portion and operate so as to transfer the articles to the plurality of sorting destinations;
a moving mechanism configured to move according to a movement of the automated guided vehicle portion and move the article transfer portion in a vertical direction with respect to the automated guided vehicle portion to a height that allows the articles to be transferred to the sorting destinations of the shelf portion; and
one or more processors configured to control the automated guided vehicle portion, the article transfer portion, and the moving mechanism, and
the processor is configured to control the automated guided vehicle portion to move to a position facing selected one of the plurality of sorting destinations of the shelf portion, and to control the article transfer portion and the moving mechanism to cause the articles to be transferred to the sorting destination.

2. The article sorting system according to claim 1, wherein:
the article transfer portion includes:
a first transfer portion that is provided on a first side above the automated guided vehicle portion, has a plurality of step portions in the vertical direction, and is configured to place at least one of the articles on each of the step portions; and
a second transfer portion that is provided on a second side opposite the first side above the automated guided vehicle portion,
each of the step portions of the first transfer portion includes a mechanism controlled by the processor, the mechanism being configured to transfer, from the first transfer portion to the second transfer portion, the articles transferred to the step portion of the first transfer portion,
the second transfer portion includes a mechanism controlled by the processor, the mechanism being configured to move away from the first transfer portion and transfer the articles one by one to the sorting destinations selected from the plurality of sorting destinations, and
the processor is configured to:
control the moving mechanism to cause the second transfer portion to move to a position where each of the articles can be transferred from the step portion selected from the plurality of step portions of the first transfer portion to the second transfer portion, and control the mechanism of the first transfer portion to cause the articles to be transferred from the step portion selected from the plurality of step portions of the first transfer portion to the second transfer portion, and
control the moving mechanism to cause the second transfer portion to move in the vertical direction according to a height of the sorting destinations of the articles, and control the mechanism of the second transfer portion to cause the articles to be transferred one by one to the sorting destinations selected from the plurality of sorting destinations of the shelf portion.

3. The article sorting system according to claim 1, wherein:
the article transfer portion includes:
a first transfer portion that is provided on a first side above the automated guided vehicle portion, has a plurality of step portions in the vertical direction, and is configured to place at least one of the articles on each of the step portions; and
a second transfer portion that is provided on a second side opposite the first side above the automated guided vehicle portion, wherein
each of the step portions of the first transfer portion includes a mechanism controlled by the processor, the mechanism being configured to transfer, from the first transfer portion to the second transfer portion, the articles transferred to the step portion of the first transfer portion,
the second transfer portion includes:
a pair of shafts that are spaced apart from each other along a direction in which the articles are moved and by a distance larger than a width of the articles in a width direction that intersects the direction in which the articles are moved,
a paddle supported by each shaft of the pair of shafts and configured to move along the each shaft of the pair of shafts, rotate about an axis of the each shaft of the pair of shafts, and move to a position where the paddle is brought into contact with the articles and transfers the articles one by one to the sorting destinations and a position where the paddle is retracted from the contact with the articles; and
one or more drive portions controlled by the processor, the one or more drive portions being configured to operate the paddle, and
the processor is configured to:
control the moving mechanism to cause the second transfer portion to move to a position where each of the articles can be transferred from the step portion selected from the plurality of step portions of the first transfer portion to the second transfer portion, and control the mechanism of the first transfer portion to cause the articles to be transferred from the step portion selected from the plurality of step portions of the first transfer portion to the second transfer portion, and
control the moving mechanism to cause the second transfer portion to move in the vertical direction according to a height of the sorting destinations of the articles, and control the one or more drive portions to cause the paddle of the second transfer portion to move to transfer the articles one by one to the sorting destinations selected from the plurality of sorting destinations of the shelf portion.

4. The article sorting system according to claim 1, wherein:
the article transfer portion includes:
a first transfer portion that is provided on a first side above the automated guided vehicle portion, has a plurality of step portions in the vertical direction, and is configured to place at least one of the articles on the step portions; and
a second transfer portion that is provided on a second side opposite the first side above the automated guided vehicle portion, wherein
each of the step portions of the first transfer portion includes a mechanism controlled by the processor, the mechanism being configured to transfer, from the first transfer portion to the second transfer portion, the articles transferred to the step portion of the first transfer portion,
the second transfer portion includes a plurality of placement surfaces and an inclination mechanism controlled by the processor and configured to incline the placement surfaces individually, and
the processor is configured to:
control the moving mechanism to cause the second transfer portion to move to a position where each of the articles can be transferred from the step portion selected from the plurality of step portions of the first transfer portion to the second transfer portion, and control the mechanism of the first transfer portion to cause the articles to be transferred from the step portion selected from the plurality of step portions of the first transfer portion to the second transfer portion, and
control the moving mechanism to cause the second transfer portion to move in the vertical direction according to a height of the sorting destinations of the articles, and control the inclination mechanism to cause the placement surfaces of the second transfer portion to be inclined individually to transfer the articles one by one to the sorting destinations selected from the plurality of sorting destinations of the shelf portion.

5. The article sorting system according to any one of claims 2 to 4, wherein:
the second transfer portion includes a rotation mechanism controlled by the processor and configured to rotate about a rotation axis extending in the vertical direction within a predetermined range, and
the processor is configured to control the rotation mechanism to cause a discharge end of the second transfer portion to be directed toward the sorting destinations selected from the plurality of sorting destinations of the shelf portion.

6. The article sorting system according to any one of claims 1 to 5, wherein:
the conveying apparatus includes a sensor controlled by the processor and configured to obtain information on the sorting destinations selected from the plurality of sorting destinations of the shelf portion.

7. An article sorting method, comprising:
obtaining information on a plurality of articles to be sorted into a plurality of sorting destinations of a shelf portion, the shelf portion being defined by a plurality of stages at least in a height direction and including the plurality of sorting destinations;
placing the plurality of articles together on an article transfer portion, the article transfer portion being configured to move according to movement of an automated guided vehicle portion of a conveying apparatus configured to convey the plurality of articles, the article transfer portion being configured to operate so as to transfer the articles to the plurality of sorting destinations;
selecting the sorting destinations of the shelf portion corresponding to the respective articles placed on the article transfer portion according to information on the respective articles, and
operating the automated guided vehicle portion of the conveying apparatus, the article transfer portion, and a moving mechanism, and transferring the plurality of articles placed on the article transfer portion to the sorting destinations corresponding thereto, the moving mechanism being configured to move the article transfer portion in a vertical direction with respect to the automated guided vehicle portion to a height that allows the articles to be transferred to the sorting destinations of the shelf portion.

8. The article sorting method according to claim 7, wherein:
the placing the plurality of articles together on the article transfer portion includes placing one or both of regularly shaped articles and irregularly shaped articles on the article transfer portion at a same time.

9. The article sorting method according to claim 7 or 8, wherein:
the placing the plurality of articles together on the article transfer portion includes:
placing, on one side, one or more articles to be sequentially sorted into the sorting destinations first among the plurality of articles, and stocking, on another side, remaining articles among the plurality of articles; and
after the articles on the one side are sequentially sorted into the sorting destinations and the articles are no longer present on the one side, moving one or more of the articles on the another side to the one side and sequentially sorting the articles into the sorting destinations corresponding to the respective articles.
